# EUROPEAN PATENT APPLICATION

(11) **EP 4 510 200 A1**
(43) Date of publication of application: **19.02.2025**
(21) Application number: 22954793.0
(22) Date of filing: 07.11.2022
(51) Int. Cl.: H01M 4/04, H01M 4/13

(54) **POSITIVE ELECTRODE SHEET AND PREPARATION METHOD THEREFOR, ELECTRODE ASSEMBLY, BATTERY CELL, AND BATTERY**

(30) Priority: 10.08.2022 CN 202210952837
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: LIN, Shiliang, hangzhou, Jiangsu 213300 (CN); XIE, Lan, hangzhou, Jiangsu 213300 (CN); LIN, Zhen, hangzhou, Jiangsu 213300 (CN); LI, Wei, hangzhou, Jiangsu 213300 (CN); WU, Xiaohui, hangzhou, Jiangsu 213300 (CN)
(74) Representative: Jacob, Reuben Ellis
(86) International application number: PCT/CN2022/130271
(87) International publication number: WO 2024/031853

(57) **Abstract**

The present application belongs to the technical field of batteries. Provided are a positive electrode sheet and a preparation method therefor, an electrode assembly, a battery cell, and a battery. The preparation method for a positive electrode sheet comprises: providing an adhesive solution on at least one face of at least part of a position to be bent of a positive-electrode current collector; performing curing to form an adhesive layer; and forming a positive-electrode active material layer on at least the face of the positive-electrode current collector that is provided with the adhesive layer. Firstly, an adhesive solution is provided on at least one face of a position to be bent of a positive-electrode current collector and curing is performed to form an adhesive layer, and a positive-electrode active material layer is then formed. Since the adhesive layer occupies part of a space, the amount of positive-electrode active material layer used on an upper side of the adhesive layer can be reduced when the positive-electrode active material layer is formed, such that the capacity of a positive-electrode active material in the region is less than the capacity of a corresponding negative-electrode active material, and the occurrence of lithium plating is reduced or avoided, thereby improving the safety of a battery and prolonging the service life thereof. Moreover, an uneven bonding face is formed on the surface of the adhesive layer, which is formed by means of curing the adhesive solution, such that the contact area between a positive electrode active material and the adhesive layer can be increased, thereby improving the bonding effect.

## Description

### CROSS-REFERENCE TO RELATED APPLICATIONS

This application claims priority to Chinese patent application No. 2022109528370, filed on August 10, 2022 and entitled "POSITIVE ELECTRODE PLATE AND PREPARATION METHOD THEREOF, ELECTRODE ASSEMBLY, BATTERY CELL, AND BATTERY", which is incorporated herein by reference in its entirety.

### TECHNICAL FIELD

This application relates to the field of battery technologies, and specifically, to a positive electrode plate and a preparation method thereof, an electrode assembly, a battery cell, and a battery.

### BACKGROUND

Lithium precipitation in batteries is one of main factors affecting electrical performance and safety performance of batteries. Lithium precipitation in batteries not only reduces the service life of batteries, but also is prone to forming dendrites with accumulation of amount of lithium precipitated. The dendrites may pierce the separator and cause a short circuit in the battery, causing a safety hazard.

### SUMMARY

In view of the foregoing problems, this application provides a positive electrode plate and a preparation method thereof, an electrode assembly, a battery cell, and a battery, to reduce or avoid lithium precipitation, thereby improving safety of batteries.

According to a first aspect, this application provides a method for preparing a positive electrode plate, where the positive electrode plate includes a positive electrode current collector, the positive electrode current collector is configured with a straight position and a to-be-bent position, and the method for preparing a positive electrode plate includes: providing an adhesive liquid on at least one surface of at least partial to-be-bent position of the positive electrode current collector and curing it to form an adhesive layer, and forming a positive electrode active material layer on at least one surface of the positive electrode current collector having the adhesive layer.

In the technical solution of the embodiments of this application, the adhesive liquid is first provided on at least one surface of the to-be-bent position of the positive electrode current collector and cured to form the adhesive layer, and then the positive electrode active material layer is formed. The adhesive layer occupies a part of the space, and therefore in forming the positive electrode active material layer, the amount of the positive electrode active material layer on the upper side of the adhesive layer can be reduced so that the positive electrode active material capacity in this region is smaller than the corresponding negative electrode active material capacity, thereby reducing or avoiding lithium precipitation and improving the safety and service life of the battery. In addition, an uneven bonding surface is formed on the surface of the adhesive layer formed by curing the adhesive liquid, increasing the contact area between the positive electrode active material and the adhesive layer, thereby improving the adhesion effect. Moreover, compared with adhesive tapes formed by stretching and other processes, the adhesive layer formed by curing the adhesive liquid has a certain flexibility.

In some embodiments, the positive electrode active material layer covering the adhesive layer is a first positive electrode active material layer, the positive electrode active material layer covering the straight position and connected to the first positive electrode active material layer is a second positive electrode active material layer, and a ratio of thickness of the first positive electrode active material layer to thickness of the second positive electrode active material layer is 20% to 80%. In the positive electrode plate of the embodiments of this application, the ratio of the thickness of the first positive electrode active material layer to the thickness of the second positive electrode active material layer should not be too large or too small. This can ensure both the energy density of the battery and reduce or avoid lithium precipitation.

In some embodiments, in forming the positive electrode active material layer, a ratio of the thickness of the second positive electrode active material layer to a sum of the thickness of the first positive electrode active material layer and thickness of the adhesive layer is 1:(0.9-1.1). In applying the positive electrode active material slurry, all regions of the semi-finished positive electrode plate obtained after the positive electrode active material slurry is applied generally have the same thickness. This ensures that after the positive electrode active material slurry forms the positive electrode active material layer, the thickness of the second positive electrode active material layer is approximately equal to the thickness sum of the first positive electrode active material layer and the adhesive layer, with some allowable tolerance for error.

In some embodiments, the adhesive liquid is a photocurable adhesive liquid. The photocurable adhesive liquid cures quickly, usually in a few seconds to tens of seconds under ultraviolet light, and therefore is suitable for automated production lines and improves operational productivity. Additionally, almost no organic volatile compounds are generated in the process of curing the photocurable adhesive.

In some embodiments, the photocurable adhesive includes a prepolymer, a monomer, and an initiator. Under the action of the initiator, the prepolymer and the monomer can polymerize into large molecules under ultraviolet light and cure.

In some embodiments, the photocurable adhesive satisfies one of the following conditions a to c: a. the prepolymer includes any one or more of unsaturated polyester, acrylate, epoxy acrylate, polyurethane acrylate, and polyester acrylate; b. the monomer includes any one or more of hydroxyethyl acrylate, hydroxypropyl methacrylate, isobornyl acrylate, tripropylene glycol acrylate, pentaerythritol triacrylate, allyl glycidyl ether, phenyl glycidyl ether, diepoxy ethylene glycol diglycidyl ether, resorcinol diglycidyl ether, N-vinylpyrrolidone, hydroxybutyl vinyl ether, and triethylene glycol divinyl ether; and c. the initiator includes any one or more of benzoin, benzoin ethyl ether, benzoin butyl ether, benzoin dimethyl ether, 2-acyl-2-methyl-1-phenyl ketone, 1-hydroxy-cyclohexyl-phenyl ketone, benzophenone, and amine compound, 2,4 diethyl thioxanthone, camphor quinone, and bis imidazole, diaryl iodonium salt, metal organic substance (cumene)cyclopentadienyliron(ii) hexa-fluorophosp, and organosilane dimethyldichlorosilane. Under the action of the initiator, the prepolymer and the monomer can polymerize into large molecules under ultraviolet light and cure.

In some embodiments, molecular weight of the prepolymer is 300 to 5000. The viscosity of the prepolymer increases with the molecule weight of the prepolymer. When the molecular weight of the prepolymer is 300 to 5000, the viscosity of the prepolymer is suitable and easy to adjust.

In some embodiments, the photocurable adhesive further includes an additive. optionally, and the additive includes any one or more of dihydrodicyclopentadienyl acrylate, 4-tert-butylcyclohexyl acrylate, triphenyl phosphite, dioctyl phthalate, and dioctyl terephthalate. Adding the additive to the photocurable adhesive can increase the adhesion and/or toughness of the adhesive layer.

In some embodiments, the photocurable adhesive includes 15wt% to 30wt% monomer, 1wt% to 7wt% initiator, 0wt% to 1wt% additive, and remaining percentage prepolymer. Choosing a suitable concentration of the initiator is beneficial for controlling the polymerization rate. Choosing suitable concentrations of the monomer and prepolymer helps form a high-quality adhesive layer. Choosing a suitable concentration of the additive allows for increased adhesion and/or toughness of the adhesive layer without significantly affecting the performance of the adhesive layer itself. Certainly, the additives can alternatively be omitted.

In some embodiments, the curing includes irradiation with ultraviolet light for 4s to 40s. The curing method of the photocurable adhesive liquid in this application is simple and quick.

In some embodiments, wavelength of the ultraviolet light is 365 nm, 375 nm, 385 nm, 395 nm, or 405 nm. Choosing the suitable wavelength of the ultraviolet light is beneficial for the curing of the photocurable adhesive liquid.

In some embodiments, light intensity of the ultraviolet light is 800 mJ/cm² to 1200 mJ/cm². Choosing the suitable light intensity of the ultraviolet light is beneficial for the curing of the photocurable adhesive liquid. In some embodiments, the adhesive liquid is a hot-melt adhesive liquid. The hot-melt adhesive can melt into a liquid state at a high temperature for coating and solidify into a solid state at room temperature to form the adhesive layer.

In some embodiments, the hot-melt adhesive includes polyolefin resin. The polyolefin resin can melt into a liquid state at a high temperature for coating and solidify into a solid state at room temperature to form the adhesive layer.

In some embodiments, before the providing an adhesive liquid on at least one surface of at least partial to-be-bent position of the positive electrode current collector, the hot-melt adhesive is heated to 100°C to 180°C for melting, and after the providing an adhesive liquid on at least one surface of at least partial to-be-bent position of the positive electrode current collector, cooling is performed for curing to form the adhesive layer. The melting and curing method of the hot-melt adhesive liquid in this application is quite simple.

In some embodiments, viscosity of the adhesive liquid is 1000 mpa.s to 20000 mpa.s. The adhesive liquid of a lower viscosity can better penetrate and wet the surface of the positive electrode current collector, thereby stably bonding to the positive electrode current collector.

In some embodiments, the positive electrode plate is used for forming an electrode assembly of a wound structure, the to-be-bent position includes a first to-be-bent position, the first to-be-bent position is used for forming a first bent portion on an innermost surface of the wound structure, and the adhesive liquid is provided on at least one surface of the first to-be-bent position. The first bent portion on the innermost surface of the electrode assembly is a region where lithium precipitation is most likely to occur. Providing the adhesive liquid on at least one surface of the first to-be-bent position to form the adhesive layer can ensure that after the wound structure is formed using the positive electrode plate, the positive electrode active material capacity at the first bent portion is smaller than the corresponding negative electrode active material capacity, thereby weakening or preventing lithium release reactions at the active material layer in that region of the positive electrode plate, and improving the safety and service life of the battery.

In some embodiments, the to-be-bent position further includes a second to-be-bent position, the second to-be-bent position is used for forming a second bent portion adjacent to the first bent portion in a winding direction, and the adhesive liquid is provided on at least one surface of the second to-be-bent position. The second bent portion on the inner surface of the electrode assembly is a region where lithium precipitation is the second most likely to occur. Providing the adhesive liquid on at least one surface of the second to-be-bent position to form the adhesive layer can ensure that after the wound structure is formed using the positive electrode plate, the positive electrode active material capacity at the second bent portion is smaller than the corresponding negative electrode active material capacity, thereby weakening or preventing lithium release reactions at the active material layer in that region of the positive electrode plate, and improving the safety and service life of the battery while the energy density of the battery is ensured.

In some embodiments, the to-be-bent position further includes a third to-be-bent position, the third to-be-bent position is used for forming a third bent portion adjacent to the second bent portion in the winding direction, and the adhesive liquid is provided on at least one surface of the third to-be-bent position. The third bent portion on the inner surface of the electrode assembly is a region where lithium precipitation is the third most likely to occur. Providing the adhesive liquid on at least one surface of the third to-be-bent position can ensure that after the wound structure is formed using the positive electrode plate, the positive electrode active material capacity at the third bent portion is smaller than the corresponding negative electrode active material capacity, thereby weakening or preventing lithium release reactions at the active material layer in that region of the positive electrode plate, and improving the safety and service life of the battery while the energy density of the battery is ensured.

In some embodiments, the to-be-bent position further includes a fourth to-be-bent position, the fourth to-be-bent position is used for forming a fourth bent portion adjacent to the third bent portion in the winding direction, and the adhesive liquid is provided on at least one surface of the fourth to-be-bent position. The fourth bent portion on the inner surface of the electrode assembly is a region where lithium precipitation is the fourth most likely to occur. Providing the adhesive liquid on at least one surface of the fourth to-be-bent position can ensure that after the wound structure is formed using the positive electrode plate, the positive electrode active material capacity at the fourth bent portion is smaller than the corresponding negative electrode active material capacity, thereby weakening or preventing lithium release reactions at the active material layer in that region of the positive electrode plate, and improving the safety and service life of the battery while the energy density of the battery is ensured.

In some embodiments, the positive electrode plate is used for forming a laminated structure, the to-be-bent position includes a fifth to-be-bent position, the fifth to-be-bent position is used for forming a fifth bent portion covering a negative electrode plate, and the adhesive liquid is provided on at least one surface of the fifth to-be-bent position. The fifth bent portion of the laminated structure is a region where lithium precipitation is the fifth most likely to occur. Providing the adhesive liquid on at least one surface of the fifth to-be-bent position can ensure that after the laminated structure is formed using the positive electrode plate, the positive electrode active material capacity at the fifth bent portion is smaller than the corresponding negative electrode active material capacity, thereby weakening or preventing lithium release reactions at the active material layer in that region of the positive electrode plate, and improving the safety and service life of the battery while the energy density of the battery is ensured.

According to a second aspect, this application provides a positive electrode plate prepared using the method for preparing a positive electrode plate according to the foregoing embodiment.

According to a third aspect, this application provides an electrode assembly including the positive electrode plate according to the foregoing embodiment.

According to a fourth aspect, this application provides a battery cell including the electrode assembly in the foregoing embodiment.

According to a fifth aspect, this application provides an electric apparatus including the battery in the foregoing embodiment, where the battery is configured to supply electrical energy.

According to a sixth aspect, this application provides a positive electrode plate including a positive electrode current collector and a positive electrode active material layer, the positive electrode active material layer is provided on at least one surface of the positive electrode current collector in a thickness direction thereof, and the positive electrode plate is configured with a straight portion and a to-be-bent portion. An adhesive layer is provided on at least one surface of the positive electrode current collector of at least partial to-be-bent portion in a thickness direction, the adhesive layer is provided between the positive electrode current collector and the positive electrode active material layer, the positive electrode active material layer covering a surface of the adhesive layer is a first positive electrode active material layer, and the positive electrode active material layer covering the straight portion and connected to the first positive electrode active material layer is a second positive electrode active material layer. The adhesive layer is formed by curing an adhesive liquid applied to a surface of the positive electrode current collector.

In the technical solution of the embodiments of this application, the adhesive layer is provided on at least one surface of the positive electrode current collector of the to-be-bent portion, and when the positive electrode active material is applied on the surface of the positive electrode current collector, the amount of the positive electrode active material applied on the surface of the adhesive layer can be reduced, to ensure that the positive electrode active material capacity in this region is smaller than the corresponding negative electrode active material capacity, thereby reducing or avoiding lithium precipitation and improving the safety and service life of the battery.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, like parts are denoted by like reference signs. In the accompanying drawings:
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a flowchart of a method for preparing a positive electrode plate according to some embodiments of this application;
FIG. 5 is a diagram of a device for manufacturing a positive electrode plate according to some embodiments of this application;
FIG. 6 is a cross-sectional view of a first type of positive electrode current collector provided with an adhesive layer on its surface according to some embodiments of this application;
FIG. 7 is a cross-sectional view of a second type of positive electrode current collector provided with an adhesive layer on its surface according to some embodiments of this application;
FIG. 8 is a top view of a first or second type of positive electrode current collector provided with an adhesive layer on its surface according to some embodiments of this application;
FIG. 9 is a cross-sectional view of a first type of positive electrode plate according to some embodiments of this application;
FIG. 10 is a cross-sectional view of a second type of positive electrode plate according to some embodiments of this application;
FIG. 11 is a cross-sectional view of a third type of positive electrode plate according to some embodiments of this application;
FIG. 12 is an electron microscope image of a combination of an adhesive layer and a positive electrode active material according to some embodiments of this application;
FIG. 13 is a schematic structural diagram of a first type of electrode assembly according to some embodiments of this application;
FIG. 14 is a partial schematic diagram of a first type of first bent portion according to some embodiments of this application;
FIG. 15 is a partial schematic diagram of a second type of first bent portion according to some embodiments of this application;
FIG. 16 is a partial schematic diagram of a third type of first bent portion according to some embodiments of this application;
FIG. 17 is a partial schematic diagram of a fourth type of first bent portion according to some embodiments of this application;
FIG. 18 is a schematic structural diagram of a second type of electrode assembly according to some embodiments of this application;
FIG. 19 is a cross-sectional view of a third type of positive electrode current collector provided with an adhesive layer on its surface according to some embodiments of this application;
FIG. 20 is a cross-sectional view of a fourth type of positive electrode current collector provided with an adhesive layer on its surface according to some embodiments of this application;
FIG. 21 is a top view of a third or fourth type of positive electrode current collector provided with an adhesive layer on its surface according to some embodiments of this application;
FIG. 22 is a schematic structural diagram of a third type of electrode assembly according to some embodiments of this application;
FIG. 23 is a cross-sectional view of a fifth type of positive electrode current collector provided with an adhesive layer on its surface according to some embodiments of this application;
FIG. 24 is a cross-sectional view of a sixth type of positive electrode current collector provided with an adhesive layer on its surface according to some embodiments of this application;
FIG. 25 is a top view of a fifth or sixth type of positive electrode current collector provided with an adhesive layer on its surface according to some embodiments of this application;
FIG. 26 is a schematic structural diagram of a fourth type of electrode assembly according to some embodiments of this application;
FIG. 27 is a cross-sectional view of a seventh type of positive electrode current collector provided with an adhesive layer on its surface according to some embodiments of this application;
FIG. 28 is a cross-sectional view of an eighth type of positive electrode current collector provided with an adhesive layer on its surface according to some embodiments of this application;
FIG. 29 is a top view of a seventh or eighth type of positive electrode current collector provided with an adhesive layer on its surface according to some embodiments of this application;
FIG. 30 is a schematic structural diagram of a fifth type of electrode assembly according to some embodiments of this application;
FIG. 31 is a schematic structural diagram of a sixth type of electrode assembly according to some embodiments of this application;
FIG. 32 is a cross-sectional view of a ninth type of positive electrode current collector provided with an adhesive layer on its surface according to some embodiments of this application;
FIG. 33 is a cross-sectional view of a tenth type of positive electrode current collector provided with an adhesive layer on its surface according to some embodiments of this application;
FIG. 34 is a top view of a ninth or tenth type of positive electrode current collector provided with an adhesive layer on its surface according to some embodiments of this application;
FIG. 35 is a partial schematic diagram of a first type of fifth bent portion according to some embodiments of this application; and
FIG. 36 is a partial schematic diagram of a second type of fifth bent portion according to some embodiments of this application.

Reference signs in specific embodiments are as follows:
1000. vehicle;
100. battery; 200. controller; 300. motor;
10. box; 11. first portion; 12. second portion; 13. accommodating space;
20. battery cell, 21. housing, 22. electrode assembly, 23. electrode terminal, 24. pressure relief structure,
211. housing body, 212. cover, 213. sealed space,
400. positive electrode plate, 401. straight portion, 402. to-be-bent portion, 410. positive electrode current collector, 411. straight position, 412. to-be-bent position, 413. first to-be-bent position, 414. second to-be-bent position, 415. third to-be-bent position, 416. fourth to-be-bent position, 417. fifth to-be-bent position, 420. adhesive layer, 430. positive electrode active material layer, 440. first positive electrode active material layer, 450. second positive electrode active material layer, 461. first bent portion, 462. second bent portion, 463. third bent portion, 464. fourth bent portion, 465. fifth bent portion,
500. manufacturing device, 510. first roll rack, 520. first unrolling apparatus, 530. first coating apparatus, 540. curing apparatus, 550. second unrolling apparatus, 560. second coating apparatus, 570. drying apparatus, 580. third unrolling apparatus, 590. third roll rack,
601. straight region, 602. bent region, 700. negative electrode plate, and 800. separator.

### DESCRIPTION OF EMBODIMENTS

The following describes in detail the embodiments of technical solutions in this application with reference to the accompanying drawings. The following embodiments are merely used to describe technical solutions in this application more explicitly, and therefore they are merely used as examples and do not constitute a limitation to the protection scope of this application.

Unless otherwise defined, all technical and scientific terms used herein shall have the same meanings as commonly understood by those skilled in the art to which this application belongs. The terms used herein are merely intended to describe the specific embodiments but not intended to constitute any limitation on this application. The terms "include", "comprise", and "having" and any other variations thereof in the specification, the claims and the foregoing brief description of drawings of this application are intended to cover a non-exclusive inclusion.

In descriptions of embodiments of this application, the terms "first", "second" and the like are merely intended to distinguish between different objects, and shall not be understood as any indication or implication of relative importance or any implicit indication of the number, specific sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment.

In the descriptions of embodiments of this application, the term "and/or" describes only an association relationship for describing associated objects and represents that three relationships may exist. For example, A and/or B may represent the following three cases: A alone, both A and B, and B alone. In addition, a character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in the embodiments of this application as suitable to specific situations.

Currently, from a perspective of market development, application of traction batteries is becoming more and more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of traction batteries, market demands for the traction batteries are also expanding.

The inventors of this application have noticed that during charging of a lithium-ion battery, lithium ions are deintercalated from a positive electrode and intercalated into a negative electrode; and during discharging, lithium ions are deintercalated from the negative electrode and intercalated into the positive electrode. During charging of the lithium-ion battery, some exceptions may occur and result in lithium precipitation, for example, insufficient space for lithium intercalation in the negative electrode, excessively large resistance to intercalation of lithium ions into the negative electrode, excessively rapid deintercalation of lithium ions from the positive electrode, inability of intercalating deintercalated lithium ions into the negative electrode active material layer of the negative electrode plate in the same amount, or lithium ions that cannot be intercalated into the negative electrode plate obtaining electrons only on the surface of the negative electrode. Consequently, a silver-white metallic lithium element is formed, which is referred to as lithium precipitation. Lithium precipitation not only reduces performance of lithium-ion batteries and greatly shortens the cycle life, but also limits a fast charging capacity of the lithium-ion batteries. In addition, when lithium precipitation occurs in the lithium-ion battery, resulting lithium metal is so active to react with the electrolyte, causing a lower self-heating start temperature and a higher self-heating rate of the battery, and therefore severely affecting battery safety. Furthermore, in case of severe lithium precipitation, deintercalated lithium ions form lithium crystals on the surface of the negative electrode plate, and the lithium crystals can pierce the separator, causing short circuits to the positive electrode plate and the negative electrode plate that are adjacent and thus thermal runaway.

The applicants have found through research that lithium precipitation often occurs in the bent region of the electrode assembly. During the winding or folding process of the positive electrode plate and negative electrode plate, the negative electrode active material in the bent region of the negative electrode plate is prone to falling off. Consequently, lithium intercalation sites at the negative electrode active material layer of the negative electrode plate are less than lithium ions provided by the positive electrode active material layer of the adjacent positive electrode plate. As a result, lithium precipitation is likely to occur during the charging of the lithium-ion battery.

In order to alleviate lithium precipitation, the applicants have attempted to provide a barrier layer between the positive electrode current collector and the positive electrode active material layer at the bent region. The barrier layer is configured to block the electron transfer between the positive electrode current collector and the positive electrode active material layer, thereby reducing or preventing the lithium releasing reaction of the positive electrode active material layer at the bent region, so as to achieve that no or few lithium ions are deintercalated from the positive electrode active material layer. However, the barrier layer often has weak adhesion, and consequently, the positive electrode active material applied on its surface is prone to falling off. This may result in an excessive amount of positive electrode active material in local regions of other positions. Such positive electrode active material may directly pierce the separator to cause a short circuit in the battery cell or cause lithium precipitation at the negative electrode in the opposite position, thereby posing a safety hazard. In addition, the barrier layer is often formed by shaping a specific tape through processes such as stretching, resulting in certain stiffness or brittleness of the barrier layer. Providing the barrier layer on the current collector increases the stiffness or brittleness of that region. During actual production, for a wound electrode assembly with the barrier layer provided at the bent region, the barrier layer and the current collector at the bent region are prone to cracking during hot pressing and shaping, resulting in the exposure of the positive electrode current collector.

The applicants have found through research that the thickness of the barrier layer being in a specific range significantly alleviates lithium precipitation. In view of the above considerations, to alleviate the problem of a large amount of lithium ions being deintercalated from the positive electrode active material layer in the bent region, the inventors have conducted in-depth research and have designed a method for preparing a positive electrode plate. The adhesive liquid is first provided on at least one surface of the to-be-bent position of the positive electrode current collector and cured to form the adhesive layer, and then the positive electrode active material layer is formed. The adhesive layer occupies a part of the space, and therefore in forming the positive electrode active material layer, the amount of the positive electrode active material layer on the upper side of the adhesive layer can be reduced so that the positive electrode active material capacity in this region is smaller than the corresponding negative electrode active material capacity, thereby reducing or avoiding lithium precipitation and improving the safety and service life of the battery. In addition, an uneven bonding surface is formed on the surface of the adhesive layer formed by curing the adhesive liquid, increasing the contact area between the positive electrode active material and the adhesive layer, thereby improving the adhesion effect. Moreover, the adhesive layer formed by curing the adhesive liquid has a certain flexibility.

The battery mentioned in the embodiments of this application is a single physical module that includes one or more battery cells for providing a higher voltage and capacity. A battery typically includes a battery box configured to enclose one or more battery cells. The battery box can prevent liquids or other foreign matter from affecting charging or discharging of the battery cell.

The battery cell may include a lithium-ion battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active material layer. The positive electrode active material layer is applied on a surface of the positive electrode current collector. The part of positive electrode current collector uncoated with the positive electrode active material layer protrudes out of the part of positive electrode current collector coated with the positive electrode active material layer and serves as a positive tab. A lithium-ion battery is used as an example, for which, the positive electrode current collector may be made of aluminum and the positive electrode active material may be lithium cobaltate, lithium iron phosphate, ternary lithium, lithium manganate, or the like. The negative electrode plate includes a negative electrode current collector and a negative electrode active material layer. The negative electrode active material layer is applied onto a surface of the negative electrode current collector. The part of negative electrode current collector uncoated with the negative electrode active material layer protrudes beyond the part of negative electrode current collector coated with the negative electrode active material layer and serves as a negative tab. The negative electrode current collector may be made of copper, and the negative electrode active material may be carbon, silicon, or the like. To allow a large current to pass through without any fusing, multiple positive tabs are provided and stacked together, and multiple negative tabs are provided and stacked together. The separator may be made of polypropylene (Polypropylene, PP), polyethylene (Polyethylene, PE), or the like. In addition, the electrode assembly may be a wound structure or a laminated structure, but the embodiments of this application are not limited thereto.

The battery cell further includes a current collecting member. The current collecting member is configured to electrically connect the tab of the battery cell to the electrode terminal to transfer electrical energy from the electrode assembly to the electrode terminal and then to the outside of the battery cell through the electrode terminal. Multiple battery cells are electrically connected through a busbar to achieve connect the multiple battery cells in series, parallel, or series-parallel.

The battery further includes sampling terminals and a battery management system. The sampling terminal is connected to the busbar to collect information of the battery cell, such as voltage or temperature. The sampling terminal transmits the collected information of the battery cell to the battery management system. When detecting that the information of the battery cell exceeds the normal range, the battery management system restricts the output power of the battery to achieve safety protection.

It can be understood that an electric apparatus that is described in the embodiments of this application and to which the battery is applicable may be take a variety of forms, for example, mobile phones, portable devices, notebook computers, electric bicycles, electric vehicles, ships, spacecrafts, electric toys, electric tools, and the like. For example, the spacecraft includes an airplane, a rocket, a space shuttle, and a spaceship; the electric toy includes a fixed or mobile electric toy, for example, a game console, an electric vehicle toy, an electric ship toy, an electric airplane toy, and the like; and the electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, an electric planer, and the like.

The battery cell and the battery described in the embodiments of this application are applicable to not only the electric apparatuses described above, but also all electric apparatuses using the battery cells and the battery. However, for brevity of description, in the following embodiments, an electric vehicle is used as an example for description.

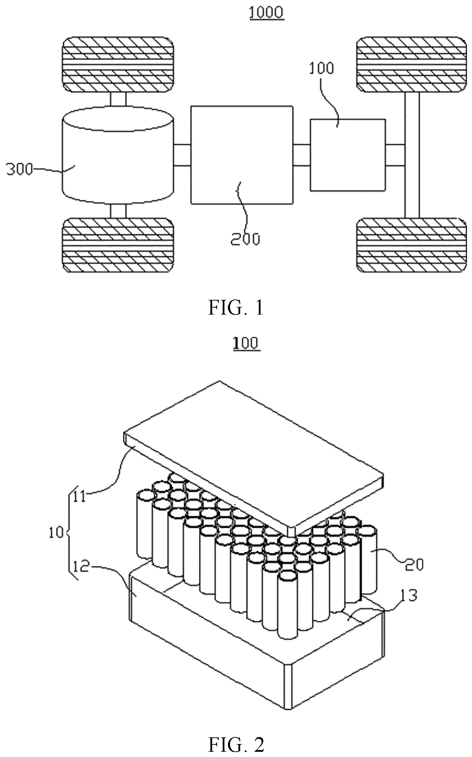

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 may include a box 10 and a battery cell 20, where the battery cell 20 is accommodated in the box 10. The box 10 is configured to accommodate the battery cell 20, and the box 10 may have various structures. In some embodiments, the box 10 may include a first portion 11 and a second portion 12. The first portion 11 and the second portion 12 fit together so that the first portion 11 and the second portion 12 jointly define an accommodating space 13 for accommodating the battery cell 20. The second portion 12 may be a hollow structure with one end open, the first portion 11 is a plate-shaped structure, and the first portion 11 covers the opening side of the second portion 12 so as to form the box 10 having the accommodating space 13. Alternatively, the first portion 11 and the second portion 12 may both be hollow structures with one side open, and the opening side of the first portion 11 is engaged with the opening side of the second portion 12 so as to form the box 10 having the accommodating space 13. Certainly, the first portion 11 and the second portion 12 may have a variety of shapes, for example, cylinder or cuboid.

There may be one or more battery cells 20 in the battery 100. If a plurality of battery cells 20 are provided, the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Alternatively, the battery module may be first formed by connecting the plurality of battery cells 20 in series, parallel, or series-parallel, and then a plurality of battery modules are connected in series, parallel, or series-parallel to form an entirety which is accommodated in the box 10. The battery 100 may further include other structures. For example, the multiple battery cells 20 may be electrically connected via a busbar so that the multiple battery cells 20 are connected in parallel, series, or series-parallel.

Each battery cell 20 may be a secondary battery or a primary battery, and may be a lithium-sulfur battery, a sodium-ion battery, or a magnesium-ion battery, without being limited thereto. The battery unit 20 may be cylindrical, flat, cuboid, or of other shapes.

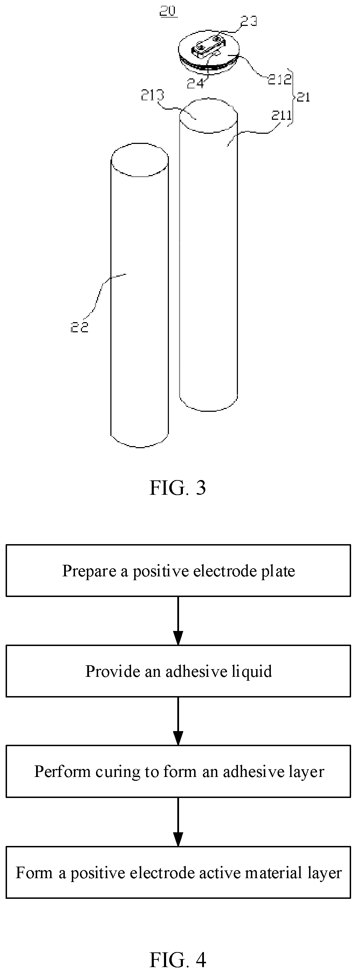

Referring to FIG. 3, FIG. 3 is an exploded view of the battery cell 20 shown in FIG. 2. The battery cell 20 refers to a smallest element constituting the battery 100. As shown in FIG. 3, the battery cell 20 may include a housing 21 and an electrode assembly 22. The electrode assembly 22 is accommodated in the housing 21. In some embodiments, the housing 21 may also be configured to accommodate an electrolyte such as a liquid electrolyte. The housing 21 may have various structure forms.

The housing 21 may include a housing body 211 and a cover 212.

The housing body 211 is a component configured to form an internal sealed space 213 of the battery cell 20 together with the cover 212. The internal sealed space 213 formed can be configured to accommodate the electrode assembly 22, the electrolyte, and other components. The housing body 211 and the cover 212 may be separate components, an opening may be formed in the housing, and the cover 212 covers the opening to form the internal environment of the battery cell 20. The cover 212 and the housing body 211 are not limited and may also be integrated. Specifically, the cover 212 and the housing body 211 may form a shared connection surface before other components are disposed in the housing and then, the housing body 211 is covered with the cover 212 when inside of the housing body 211 needs to be enclosed. The housing body 211 may be of various shapes and sizes, such as a cuboid shape, a cylindrical shape, and a hexagonal prism shape. Specifically, a shape of the housing body 211 may be determined according to a specific shape and size of the electrode assembly 22. The housing body 211 may be made of various materials, such as copper, iron, aluminum, stainless steel, aluminum alloy, and plastic, which are not particularly limited in the embodiments of this application.

The cover 212 refers to a component that covers an opening of the housing body 211 to isolate an internal environment of the battery cell 20 from an external environment thereof. A shape of the cover 212 is not limited and may be adapted to a shape of the housing body 211 to match the housing body 211. In some embodiments, the cover 212 may be made of a material with given hardness and strength (for example, aluminum alloy), so that the cover 212 is less likely to deform when subjected to extrusion and collision, allowing the battery cell 20 to have higher structural strength and enhanced safety performance. The cover assembly 212 may also be made of another material, such as copper, iron, aluminum, stainless steel, aluminum alloy, or plastic, which are not particularly limited in the embodiments of this application. In some embodiments, an insulator may also be provided at an inner surface of the end cover 212. The insulator may be configured to isolate an electrically connected component in the housing body 211 from the end cover 212 to reduce a risk of short circuit. For example, the insulator may be made of plastic, rubber, or the like.

The cover 212 may be provided with functional components such as an electrode terminal 23. The electrode terminal 23 is mounted on the cover 212. The electrode terminal 23 is electrically connected to the electrode assembly 22 for outputting electrical energy generated by the battery cell 20. For example, the electrode terminal 23 may be electrically connected to the electrode assembly 22 through an adapter sheet (not shown).

The battery cell 20 may further include a pressure relief structure 24. The pressure relief structure 24 is configured to relieve internal pressure of the battery cell 20 when the internal pressure or temperature of the battery cell 20 reaches a predetermined value. For example, the pressure relief structure 24 may be a component such as an explosion-proof valve, a rupture disk, an air valve, a pressure relief valve, or a security valve.

During assembly of the battery cell 20, the electrode assembly 22 may be placed inside the housing body 211, and the electrolyte is filled into the housing body 211. Then, the opening of the housing body 211 is covered by the cover 212.

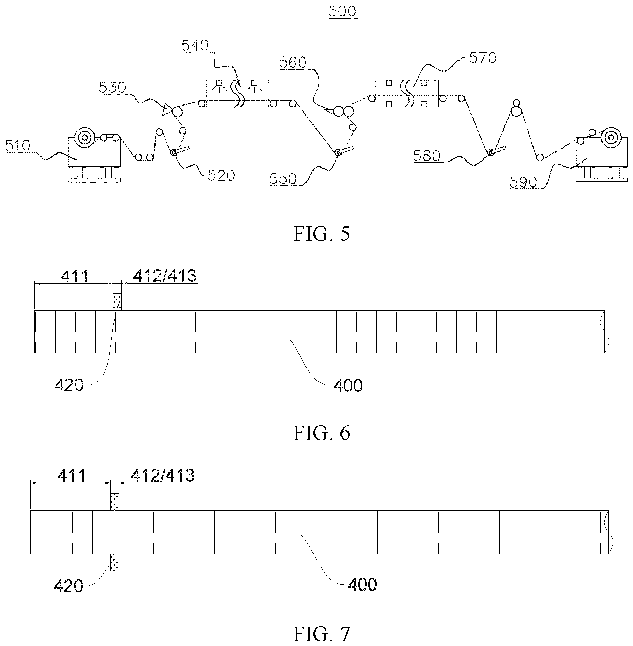

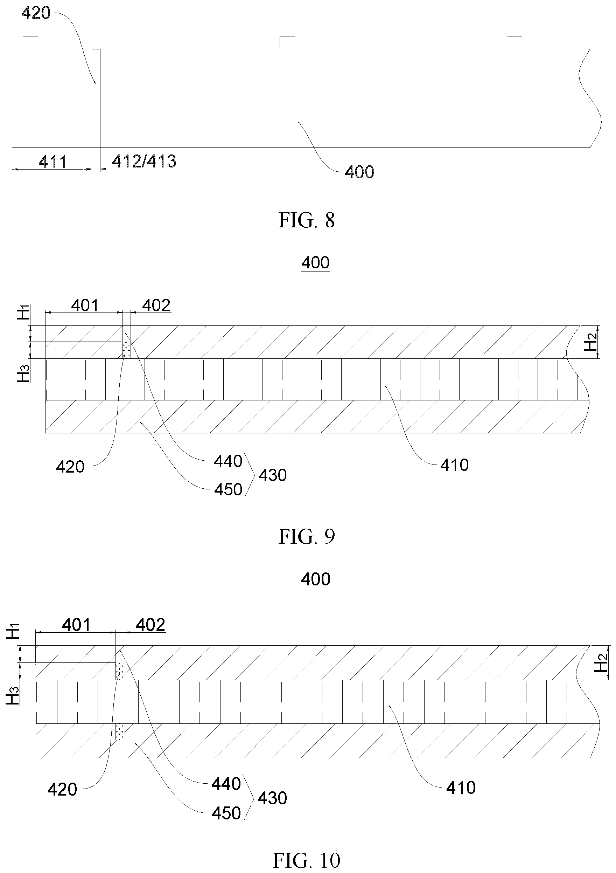

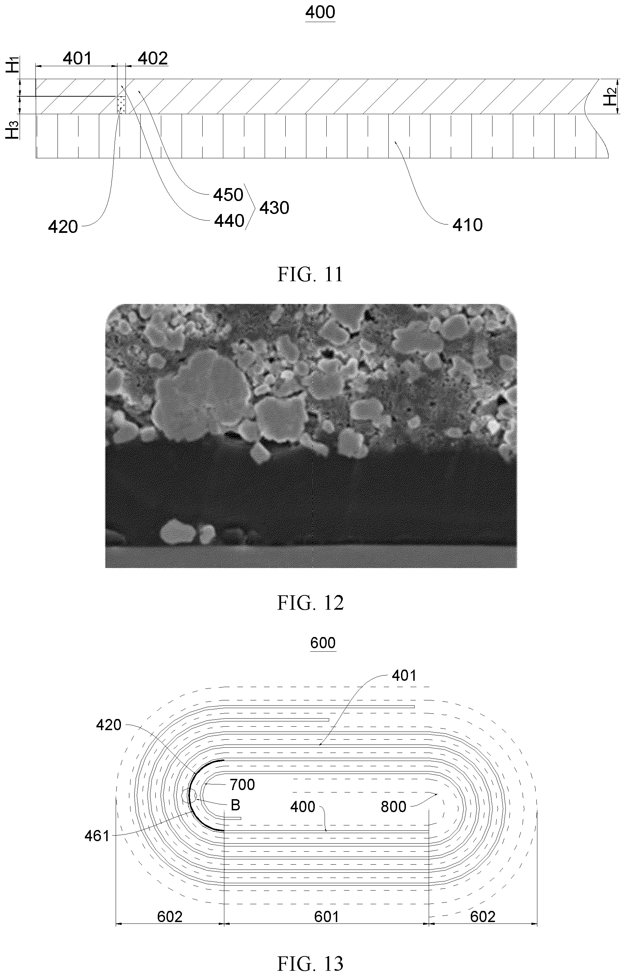

According to some embodiments of this application, referring to FIGs. 4 to 12, FIG. 4 is a flowchart of a method for preparing a positive electrode plate according to some embodiments of this application, FIG. 5 is a diagram of a manufacturing device of a positive electrode plate according to some embodiments of this application, FIG. 6 is a cross-sectional view of a first type of positive electrode current collector provided with an adhesive layer on its surface according to some embodiments of this application, FIG. 7 is a cross-sectional view of a second type of positive electrode current collector provided with an adhesive layer on its surface according to some embodiments of this application, FIG. 8 is a top view of a first or second type of positive electrode current collector provided with an adhesive layer on its surface according to some embodiments of this application, FIG. 9 is a cross-sectional view of a first type of positive electrode plate according to some embodiments of this application, FIG. 10 is a cross-sectional view of a second type of positive electrode plate according to some embodiments of this application, FIG. 11 is a cross-sectional view of a third type of positive electrode plate according to some embodiments of this application, and FIG. 12 is an electron microscope image of a combination of an adhesive layer and a positive electrode active material according to some embodiments of this application.

Referring to FIGs. 4 to 12, this application provides a method for preparing a positive electrode plate, where the positive electrode plate 400 includes a positive electrode current collector 410, the positive electrode current collector 410 is configured with a straight position 411 and a to-be-bent position 412, and the method for preparing a positive electrode plate includes: providing an adhesive liquid on at least one surface of at least partial to-be-bent position 412 of the positive electrode current collector 410 and curing it to form an adhesive layer 420, and forming a positive electrode active material layer 430 on at least one surface of the positive electrode current collector 410 having the adhesive layer 420.

The straight position 411 is a portion of the positive electrode current collector 410 that forms a straight region 601 after winding or bending. The positive electrode active material layer 430 is formed on the surface of the positive electrode current collector 410 to obtain the positive electrode plate 400. The positive electrode plate 400 is configured with a straight portion 401 and a to-be-bent portion 402, and the straight position 411 corresponds to the straight portion 401.

The to-be-bent position 412 is a portion of the positive electrode current collector 410 that forms a bent region 602 after winding or bending. The positive electrode active material layer 430 is formed on the surface of the positive electrode current collector 410 to obtain the positive electrode plate 400. The positive electrode plate 400 is configured with the straight portion 401 and the to-be-bent portion 402, and the to-be-bent position 412 corresponds to the to-be-bent portion 402.

The adhesive liquid is a substance that has viscosity and exhibits a liquid state under a certain condition.

The adhesive layer 420 is provided on at least one surface of the to-be-bent position 412 of the positive electrode current collector 410 and is a layer-like structure that cannot release active materials.

The adhesive liquid is first provided on at least one surface of the to-be-bent position 412 of the positive electrode current collector 410 and cured to form the adhesive layer 420, and then the positive electrode active material layer 430 is formed. The adhesive layer 420 occupies a part of the space, and therefore in forming the positive electrode active material layer 430, the amount of the positive electrode active material layer 430 on the upper side of the adhesive layer 420 can be reduced so that the positive electrode active material capacity in this region is smaller than the corresponding negative electrode active material capacity, thereby reducing or avoiding lithium precipitation and improving the safety and service life of the battery. Moreover, compared with adhesive tapes formed by stretching and other processes, the adhesive layer 420 formed by curing the adhesive liquid has a certain flexibility. Refer to FIG. 5. The positive electrode plate 400 may be manufactured using the manufacturing device 500 of positive electrode plate shown in FIG. 5 and the method for preparing a positive electrode plate of this application. The method for preparing a positive electrode plate includes: placing the positive electrode current collector 410 onto a first roll rack 510, applying an adhesive liquid at a target position by using a first coating apparatus 530, after the positive electrode current collector 410 coated with the adhesive liquid passes through a first unrolling apparatus 520, curing the positive electrode current collector 410 coated with the adhesive liquid by using a curing apparatus 540, to form the adhesive layer 420, coating at least one surface of the positive electrode current collector 410 with a positive electrode active material slurry by using a second coating apparatus 560 after the positive electrode current collector 410 passes through a second unrolling apparatus 550, drying the positive electrode current collector 410 coated with the positive electrode active material slurry by using a drying apparatus 570, to obtain the positive electrode plate 400, reeling in the positive electrode plate 400 with a third roll rack 590 after it passes through a third unrolling apparatus 580.

Whether the adhesive liquid is provided on one or two surfaces of the positive electrode current collector 410 in the thickness direction thereof to form the adhesive layer 420 is not limited in the method for preparing a positive electrode plate of this application.

For example, referring to FIG. 6, the adhesive liquid is provided on only one surface of the positive electrode current collector 410 to form the adhesive layer 420 in the method for preparing a positive electrode plate of this application.

For example, referring to FIG. 7, the adhesive liquid is provided on two surfaces of the positive electrode current collector 410 to form the adhesive layer 420 in the method for preparing a positive electrode plate of this application.

Whether the positive electrode active material layer 430 is formed on one or two surfaces of the positive electrode current collector 410 in the thickness direction thereof is not limited in the method for preparing a positive electrode plate of this application.

For example, referring to FIG. 9, the adhesive liquid is provided on only one surface of the positive electrode current collector 410 to form the adhesive layer 420, but the positive electrode active material layer 430 is formed on two surfaces of the positive electrode current collector 410 in the method for preparing a positive electrode plate of this application.

For example, referring to FIG. 10, the adhesive liquid is provided on two surfaces of the positive electrode current collector 410 to form the adhesive layer 420, and the positive electrode active material layer 430 is formed on two surfaces of the positive electrode current collector 410 in the method for preparing a positive electrode plate of this application.

For example, referring to FIG. 11, the adhesive liquid is provided on only one surface of the positive electrode current collector 410 to form the adhesive layer 420, and the positive electrode active material layer 430 is formed only on a surface of the positive electrode current collector 410 formed with the adhesive layer 420 in the method for preparing a positive electrode plate of this application.

For example, ions released by the positive electrode active material are lithium ions.

Refer to FIG. 12. An uneven bonding surface is formed on the surface of the adhesive layer 420 formed by the curing the adhesive liquid, increasing the contact area between the positive electrode active material and the adhesive layer 420, thereby improving the adhesion effect.

According to some embodiments of this application, optionally, as shown in FIGs. 9 to 11, the positive electrode active material layer 430 covering the adhesive layer 420 is a first positive electrode active material layer 440, the positive electrode active material layer 430 covering the straight position 411 and connected to the first positive electrode active material layer 440 is a second positive electrode active material layer 450, and a ratio of thickness (H1) of the first positive electrode active material layer 440 to thickness (H2) of the second positive electrode active material layer 450 is 20% to 80%.

For example, the ratio of the thickness of the first positive electrode active material layer 440 to the thickness of the second positive electrode active material layer 450 may be 20%, 25%, 30%, 35%, 40%, 45%, 50%, 55%, 60%, 65%, 70%, 75%, or 80%.

In the positive electrode plate 400 of this application's embodiments, the ratio of the thickness of the first positive electrode active material layer 440 to the thickness of the second positive electrode active material layer 450 should not be too large or too small. This can ensure both the energy density of the battery and reduce or avoid lithium precipitation.

Optionally, the ratio of the thickness of the first positive electrode active material layer 440 to the thickness of the second positive electrode active material layer 450 is 30% to 60%.

Optionally, the ratio of the thickness of the first positive electrode active material layer 440 to the thickness of the second positive electrode active material layer 450 is 45% to 55%.

According to some embodiments of this application, optionally, in forming the positive electrode active material layer 430, a ratio of the thickness of the second positive electrode active material layer 450 to a sum of the thickness of the first positive electrode active material layer 440 and thickness (H3) of the adhesive layer 420 is 1:(0.9-1.1).

For example, the ratio of the thickness of the second positive electrode active material layer 450 to a sum of the thickness of the first positive electrode active material layer 440 and thickness of the adhesive layer 420 is 1:0.9, 1:0.95, 1:1, 1:1.05, or 1:1.1.

In applying the positive electrode active material slurry, all regions of the semi-finished positive electrode plate 400 obtained after the positive electrode active material slurry is applied generally have the same thickness. This ensures that after the positive electrode active material slurry forms the positive electrode active material layer 430, the thickness of the second positive electrode active material layer 450 is approximately equal to the thickness sum of the first positive electrode active material layer 440 and the adhesive layer 420, with some allowable tolerance for error.

Optionally, a ratio of the thickness of the second positive electrode active material layer 450 to a sum of the thickness of the first positive electrode active material layer 440 and thickness of the adhesive layer 420 is 1:(0.95-1.05).

According to some embodiments of this application, optionally, the adhesive liquid is a photocurable adhesive liquid.

The photocurable adhesive is a material that only cures under irradiation of ultraviolet light. The photocurable adhesive liquid refers to a photocurable adhesive not cured yet.

The photocurable adhesive liquid cures quickly, usually in a few seconds to tens of seconds under ultraviolet light, and therefore is suitable for automated production lines and improves operational productivity. Additionally, almost no organic volatile compounds are generated in the process of curing the photocurable adhesive.

Refer to FIG. 5. The curing apparatus 540 is an UV curing apparatus 540.

According to some embodiments of this application, optionally, the photocurable adhesive includes a prepolymer, a monomer, and an initiator.

The prepolymer or referred to as pre-polymer is a substance formed by the preliminary polymerization of monomers.

Monomer refers to an unsaturated, cyclic, or low-molecular-weight compound containing two or more functional groups.

Initiator refers to a type of compound that is easily thermally decomposed into free radicals. It can be used to initiate free radical polymerization and copolymerization reactions of olefinic and diolefinic monomers, as well as crosslinking and curing reactions of unsaturated polyesters and polymer crosslinking reactions.

Under the action of the initiator, the prepolymer and the monomer can polymerize into large molecules under ultraviolet light and cure.

According to some embodiments of this application, optionally, the photocurable adhesive satisfies one of the following conditions a to c: a. the prepolymer includes any one or more of unsaturated polyester, acrylate, epoxy acrylate, polyurethane acrylate, and polyester acrylate; b. the monomer includes any one or more of hydroxyethyl acrylate, hydroxypropyl methacrylate, isobornyl acrylate, tripropylene glycol acrylate, pentaerythritol triacrylate, allyl glycidyl ether, phenyl glycidyl ether, diepoxy ethylene glycol diglycidyl ether, resorcinol diglycidyl ether, N-vinylpyrrolidone, hydroxybutyl vinyl ether, and triethylene glycol divinyl ether; and c. the initiator includes any one or more of benzoin, benzoin ethyl ether, benzoin butyl ether, benzoin dimethyl ether, 2-acyl-2-methyl-1-phenyl ketone, 1-hydroxy-cyclohexyl-phenyl ketone, benzophenone, and amine compound, 2,4 diethyl thioxanthone, camphor quinone, and bis imidazole, diaryl iodonium salt, metal organic substance (cumene)cyclopentadienyliron(ii) hexa-fluorophosp, and organosilane dimethyldichlorosilane.

Under the action of the initiator, the prepolymer and the monomer can polymerize into large molecules under ultraviolet light and cure.

According to some embodiments of this application, optionally, molecular weight of the prepolymer is 300 to 5000.

For example, the molecular weight of the prepolymer may be 300, 400, 500, 800, 1000, 1200, 1500, 1800, 2000, 2200, 2500, 2800, 3000, 3200, 3500, 3800, 4000, 4200, 4500, 4800, or 5000.

The viscosity of the prepolymer increases with the molecule weight of the prepolymer. When the molecular weight of the prepolymer is 300 to 5000, the viscosity of the prepolymer is suitable and easy to adjust.

According to some embodiments of this application, optionally, the photocurable adhesive further includes an additive, and the additive includes any one or more of dihydrodicyclopentadienyl acrylate, 4-tert-butylcyclohexyl acrylate, triphenyl phosphite, dioctyl phthalate, and dioctyl terephthalate.

Adding the additive to the photocurable adhesive can increase the adhesion and/or toughness of the adhesive layer 420.

According to some embodiments of this application, optionally, the photocurable adhesive includes 15wt% to 30wt% monomer, 1wt% to 7wt% initiator, 0wt% to 1wt% additive, and remaining percentage prepolymer.

For example, the photocurable adhesive may include 15wt%, 18wt%, 20wt%, 22wt%, 25wt%, 28wt%, or 30wt% monomer, 1wt%, 2wt%, 3wt%, 4wt%, 5wt%, 6wt%, or 7wt% initiator, 0wt%, 0.1wt%, 0.2wt%, 0.5wt%, 0.8wt%, or 1wt% additive, and remaining percentage of the prepolymer.

Too little initiator results in slow polymerization and insufficient polymerization reaction, affecting the curing speed of the photocurable adhesive and the strength of the obtained adhesive layer 420. Too much initiator results in waste and even excessive free radicals, leading to quenching and counterproductive effects. Choosing a suitable concentration of the initiator is beneficial for controlling the polymerization rate. Choosing suitable concentrations of the monomer and prepolymer helps form a high-quality adhesive layer 420. Choosing a suitable concentration of the additive allows for increased adhesion and/or toughness of the adhesive layer 420 without significantly affecting the performance of the adhesive layer 420 itself. Certainly, the additives can alternatively be omitted.

According to some embodiments of this application, optionally, the curing includes irradiation with ultraviolet light for 4s to 40s.

For example, curing includes ultraviolet light irradiation for 4s, 5s, 8s, 10s, 12s, 15s, 18s, 20s, 22s, 25s, 28s, 30s, 32s, 35s, 38s, or 40s.

The curing method of the photocurable adhesive liquid in this application is simple and quick.

According to some embodiments of this application, optionally, wavelength of the ultraviolet light is 365 nm, 375 nm, 385 nm, 395 nm, or 405 nm.

Choosing the suitable wavelength of the ultraviolet light is beneficial for the curing of the photocurable adhesive liquid.

According to some embodiments of this application, optionally, light intensity of the ultraviolet light is 800 mJ/cm² to 1200 mJ/cm².

For example, the light intensity of the ultraviolet light may be 800 mJ/cm², 850 mJ/cm², 900 mJ/cm², 950 mJ/cm², 1000 mJ/cm², 1050 mJ/cm², 1100 mJ/cm², 1150 mJ/cm², or 1200 mJ/cm².

Choosing the suitable light intensity of the ultraviolet light is beneficial for the curing of the photocurable adhesive liquid.

According to some embodiments of this application, optionally, the adhesive liquid is a hot-melt adhesive liquid.

The hot-melt adhesive is a plastic material whose physical state changes with temperature within a certain temperature range while its chemical properties remain unchanged.

The hot-melt adhesive liquid is the uncured hot-melt adhesive at a high temperature.

The hot-melt adhesive can melt into a liquid state at a high temperature for coating and solidify into a solid state at room temperature to form the adhesive layer 420.

Refer to FIG. 5. The curing apparatus 540 is a cooling curing apparatus 540, or the curing apparatus 540 is omitted, and the curing is directly performed at room temperature.

According to some embodiments of this application, optionally, the hot-melt adhesive includes polyolefin resin.

The resin can melt into a liquid state at a high temperature for coating and solidify into a solid state at room temperature to form the adhesive layer 420.

Optionally, the polyolefin resin includes any one or more of polypropylene, polyethylene, polybutadiene rubber, ethylene-propylene acetate copolymer, ethylene-propylene copolymer, ethylene-vinyl acetate copolymer, maleic anhydride-modified polyolefin and poly(butadiene-acrylonitrile), and styrene-maleic anhydride copolymer.

Optionally, the melting point of the hot-melt adhesive is 100°C to 180°C.

For example, the melting point of the hot-melt adhesive may be 100°C, 110°C, 120°C, 130°C, 140°C, 150°C, 160°C, 170°C, or 180°C.

According to some embodiments of this application, optionally, before the providing an adhesive liquid on at least one surface of at least partial to-be-bent position 412 of the positive electrode current collector 410, the hot-melt adhesive is heated to 100°C to 180°C for melting, and after the providing an adhesive liquid on at least one surface of at least partial to-be-bent position 412 of the positive electrode current collector 410, cooling is performed for curing to form the adhesive layer 420.

The melting and curing method of the hot-melt adhesive liquid in this application is quite simple.

According to some embodiments of this application, optionally, viscosity of the adhesive liquid is 1000 mpa.s to 20000 mpa.s.

For example, the viscosity of the adhesive liquid may be 1000 mPa·s, 2000 mPa·s, 5000 mPa·s, 8000 mPa·s, 10000 mPa·s, 12000 mPa·s, 15000 mPa·s, 18000 mPa·s, or 20000 mPa·s.

Viscosity of the adhesive liquid is 1000 mpa.s to 20000 mpa.s. The adhesive liquid of a lower viscosity can better penetrate and wet the surface of the positive electrode current collector 410, thereby stably bonding to the positive electrode current collector 410.

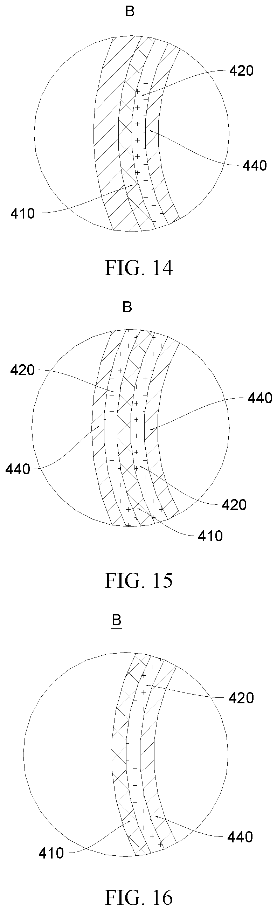

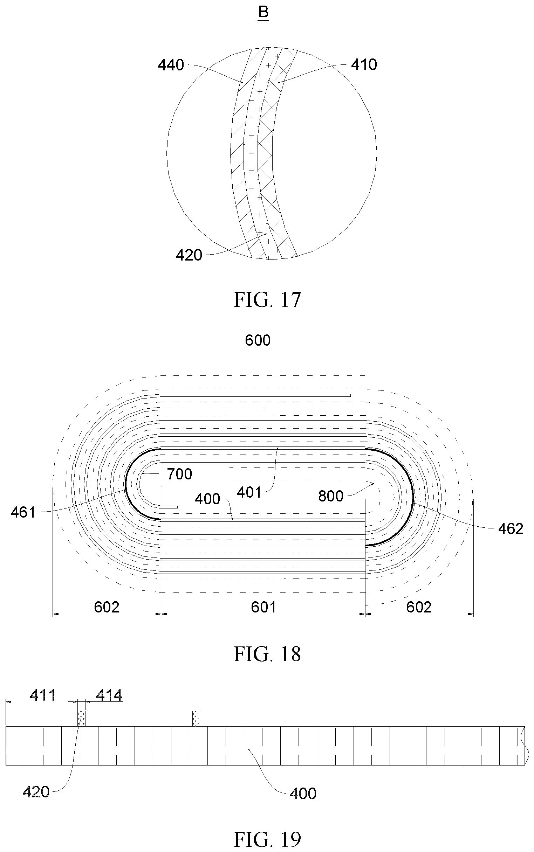

According to some embodiments of this application, optionally, referring to FIGs. 6 to 8 and 13 to 17, FIG. 13 is a schematic structural diagram of a first type of electrode assembly according to some embodiments of this application, FIG. 14 is a partial schematic diagram of a first type of first bent portion according to some embodiments of this application, FIG. 15 is a partial schematic diagram of a second type of first bent portion according to some embodiments of this application, FIG. 16 is a partial schematic diagram of a third type of first bent portion according to some embodiments of this application, and FIG. 17 is a partial schematic diagram of a fourth type of first bent portion according to some embodiments of this application. The positive electrode plate 400 is used for forming an electrode assembly 22 of a wound structure, the to-be-bent position 412 includes a first to-be-bent position 413, the first to-be-bent position 413 is used for forming a first bent portion 461 on an innermost surface of the wound structure, and the adhesive liquid is provided on at least one surface of the first to-be-bent position 413.

Refer to FIG. 13. The electrode assembly 22 of the wound structure refers to an electrode assembly 22 formed by winding the positive electrode plate 400, the negative electrode plate 700, and the separator 800. The electrode assembly 22 has bent regions 602 and a straight region 601. The straight region 601 is connected to the bent region 602. The middle part of the electrode assembly 22 is the straight region 601, and the bent regions 602 are at two ends of the straight region 601. After winding, the straight position 411 is formed into the straight portion 401. The straight portion 401 is in the straight region 601. The to-be-bent position 412 is wound to form a bending part. The bending part is in the bent region 602. In addition, the positive electrode plate 400 and the negative electrode plate 700 that are located in the bent region 602 being closer to the center of the wound structure means greater curvature of a curve formed after the winding.

The first to-be-bent position 413 is a position of the positive electrode current collector 410 where the adhesive liquid is provided, and the first to-be-bent position 413 corresponds to the first bent portion 461.

The first bent portion 461 is a structure with the largest curvature in the positive electrode plate 400.

The first bent portion 461 on the innermost surface of the electrode assembly 22 is a region where lithium precipitation is most likely to occur. Providing the adhesive liquid on at least one surface of the first to-be-bent position 413 to form the adhesive layer 420 can ensure that after the wound structure is formed using the positive electrode plate 400, the positive electrode active material capacity at the first bent portion 461 is smaller than the corresponding negative electrode active material capacity, thereby weakening or preventing lithium release reactions at the active material layer in that region of the positive electrode plate 400, and improving the safety and service life of the battery.

Optionally, the adhesive layer 420 is formed by providing the adhesive liquid on one surface of the first to-be-bent position 413, and the adhesive layer 420 is located on the inner surface of the first bent portion 461.

For the electrode assembly 22 of the wound structure, the inner surface of the positive electrode current collector 410 is larger than the outer surface of the corresponding negative electrode current collector. As a result, a positive electrode active material capacity at the inner surface of the positive electrode current collector 410 is larger than the corresponding negative electrode active material capacity under normal conditions, leading to highly likely lithium precipitation reaction. Providing the adhesive liquid on one surface of the first to-be-bent position 413 to form the adhesive layer 420 can reduce the positive electrode active material capacity at the inner surface of the positive electrode current collector 410 of the first bent portion 461, ensuring that the positive electrode active material capacity in that region is smaller than the corresponding the negative electrode active material capacity, thereby weakening or preventing lithium release reactions at the active material layer of some bent regions 602 of the positive electrode plate 400, and improving the safety and service life of the battery.

Refer to FIG. 14. The adhesive liquid is provided on one surface of the first to-be-bent position 413 to form the adhesive layer 420, the first bent portion 461 includes the positive electrode current collector 410, the second positive electrode active material layer 450 on the outer surface of the positive electrode current collector 410, the adhesive layer 420 on the inner surface of the positive electrode current collector 410, and the first positive electrode active material layer 440.

Refer to FIG. 15. The adhesive liquid is provided on two surfaces of the first to-be-bent position 413 to form the adhesive layer 420, and the first bent portion 461 includes the positive electrode current collector 410, the adhesive layers 420 on two surfaces of the positive electrode current collector 410, and the first positive electrode active material layer 440.

Refer to FIG. 16. The adhesive liquid is provided on one surface of the first to-be-bent position 413 to form the adhesive layer 420, and the first bent portion 461 includes the positive electrode current collector 410, the adhesive layer 420 on the inner surface of the positive electrode current collector 410, and the first positive electrode active material layer 440.

Refer to FIG. 17. The adhesive liquid is provided on one surface of the first to-be-bent position 413 to form the adhesive layer 420, and the first bent portion 461 includes the positive electrode current collector 410, the adhesive layer 420 on the outer surface of the positive electrode current collector 410, and the first positive electrode active material layer 440.

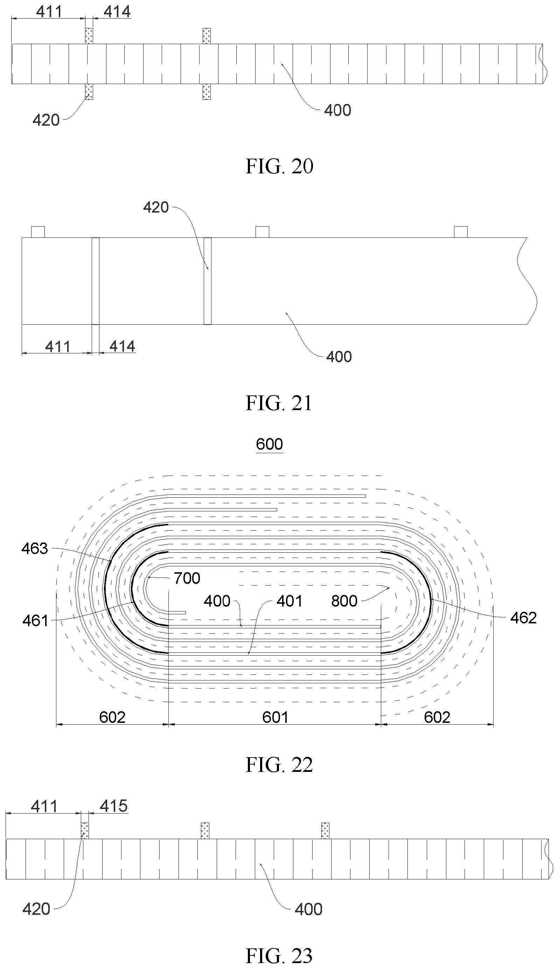

According to some embodiments of this application, optionally, referring to FIGs. 18 to 21, FIG. 18 is a schematic structural diagram of a second type of electrode assembly according to some embodiments of this application, FIG. 19 is a cross-sectional view of a third type of positive electrode current collector provided with an adhesive layer on its surface according to some embodiments of this application, FIG. 20 is a cross-sectional view of a fourth type of positive electrode current collector provided with an adhesive layer on its surface according to some embodiments of this application, and FIG. 21 is a top view of a third or fourth type of positive electrode current collector provided with an adhesive layer on its surface according to some embodiments of this application. The to-be-bent position 412 further includes a second to-be-bent position 414, the second to-be-bent position 414 is used for forming a second bent portion 462 adjacent to the first bent portion 461 in a winding direction, and the adhesive liquid is provided on at least one surface of the second to-be-bent position 414.

The second to-be-bent position 414 is a position of the positive electrode current collector 410 where the adhesive liquid is provided, and the second to-be-bent position 414 corresponds to the second bent portion 462.

The second bent portion 462 is a structure with the second largest curvature of the positive electrode plate 400, and a straight portion 401 is provided between the second bent portion 462 and the first bent portion 461.

The second bent portion 462 on the inner surface of the electrode assembly 22 is a region where lithium precipitation is the second most likely to occur. Providing the adhesive liquid on at least one surface of the second to-be-bent position 414 to form the adhesive layer 420 can ensure that after the wound structure is formed using the positive electrode plate 400, the positive electrode active material capacity at the second bent portion 462 is smaller than the corresponding negative electrode active material capacity, thereby weakening or preventing lithium release reactions at the active material layer in that region of the positive electrode plate 400, and improving the safety and service life of the battery while the energy density of the battery is ensured.

Optionally, the adhesive layer 420 is formed by providing the adhesive liquid on one surface of the second to-be-bent position 414, and the adhesive layer 420 is located on the inner surface of the second bent portion 462.

For example, with the adhesive liquid provided on one surface of the second to-be-bent position 414 to form the adhesive layer 420, the second bent portion 462 may include the positive electrode current collector 410, the second positive electrode active material layer 450 on the outer surface of the positive electrode current collector 410, the adhesive layer 420 on the inner surface of the positive electrode current collector 410, and the first positive electrode active material layer 440. Alternatively, with the adhesive liquid provided on two surfaces of the second to-be-bent position 414 to form the adhesive layer 420, the second bent portion 462 may include the positive electrode current collector 410, the adhesive layer 420 on two surfaces of the positive electrode current collector 410, and the first positive electrode active material layer 440. Alternatively, with the adhesive liquid provided on one surface of the second to-be-bent position 414 to form the adhesive layer 420, the second bent portion 462 may include the positive electrode current collector 410, the adhesive layer 420 on the inner surface of the positive electrode current collector 410, and the first positive electrode active material layer 440. Alternatively, with the adhesive liquid provided on one surface of the second to-be-bent position 414 to form the adhesive layer 420, the second bent portion 462 may include the positive electrode current collector 410, the adhesive layer 420 on the outer surface of the positive electrode current collector 410, and the first positive electrode active material layer 440.

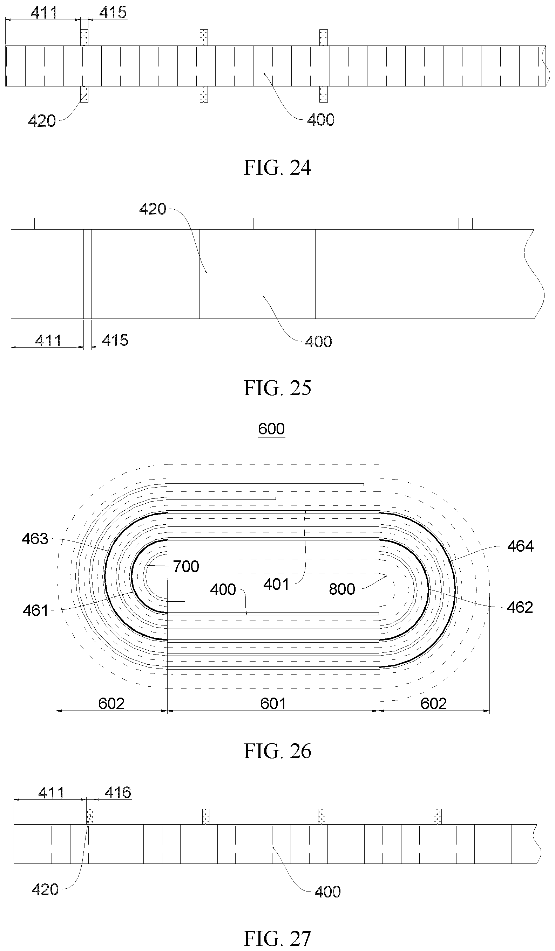

According to some embodiments of this application, optionally, referring to FIGs. 22 to 25, FIG. 22 is a schematic structural diagram of a third type of electrode assembly according to some embodiments of this application, FIG. 23 is a cross-sectional view of a fifth type of positive electrode current collector provided with an adhesive layer on its surface according to some embodiments of this application, FIG. 24 is a cross-sectional view of a sixth type of positive electrode current collector provided with an adhesive layer on its surface according to some embodiments of this application, and FIG. 25 is a top view of a fifth or sixth type of positive electrode current collector provided with an adhesive layer on its surface according to some embodiments of this application. The to-be-bent position 412 further includes a third to-be-bent position 415, the third to-be-bent position 415 is used for forming a third bent portion 463 adjacent to the second bent portion 462 in the winding direction, and the adhesive liquid is provided on at least one surface of the third to-be-bent position 415.

The third to-be-bent position 415 is a position of the positive electrode current collector 410 where the adhesive liquid is provided, and the third to-be-bent position 415 corresponds to the third bent portion 463.

The third bent portion 463 is a structure with the third largest curvature of the positive electrode plate 400, and a straight portion 401 is provided between the third bent portion 463 and the second bent portion 462.

The third bent portion 463 on the inner surface of the electrode assembly 22 is a region where lithium precipitation is the third most likely to occur. Providing the adhesive liquid on at least one surface of the third to-be-bent position 415 can ensure that after the wound structure is formed using the positive electrode plate 400, the positive electrode active material capacity at the third bent portion 463 is smaller than the corresponding negative electrode active material capacity, thereby weakening or preventing lithium release reactions at the active material layer in that region of the positive electrode plate 400, and improving the safety and service life of the battery while the energy density of the battery is ensured.

Optionally, the adhesive layer 420 is formed by providing the adhesive liquid on one surface of the third to-be-bent position 415, and the adhesive layer 420 is located on the inner surface of the third bent portion 463.

For example, with the adhesive liquid provided on one surface of the third to-be-bent position 415 to form the adhesive layer 420, the third bent portion 463 may include the positive electrode current collector 410, the second positive electrode active material layer 450 on the outer surface of the positive electrode current collector 410, the adhesive layer 420 on the inner surface of the positive electrode current collector 410, and the first positive electrode active material layer 440. Alternatively, with the adhesive liquid provided on two surfaces of the third to-be-bent position 415 to form the adhesive layer 420, the third bent portion 463 may include the positive electrode current collector 410, the adhesive layer 420 on two surfaces of the positive electrode current collector 410, and the first positive electrode active material layer 440. Alternatively, with the adhesive liquid provided on one surface of the third to-be-bent position 415 to form the adhesive layer 420, the third bent portion 463 may include the positive electrode current collector 410, the adhesive layer 420 on the inner surface of the positive electrode current collector 410, and the first positive electrode active material layer 440. Alternatively, with the adhesive liquid provided on one surface of the third to-be-bent position 415 to form the adhesive layer 420, the third bent portion 463 may include the positive electrode current collector 410, the adhesive layer 420 on the outer surface of the positive electrode current collector 410, and the first positive electrode active material layer 440.

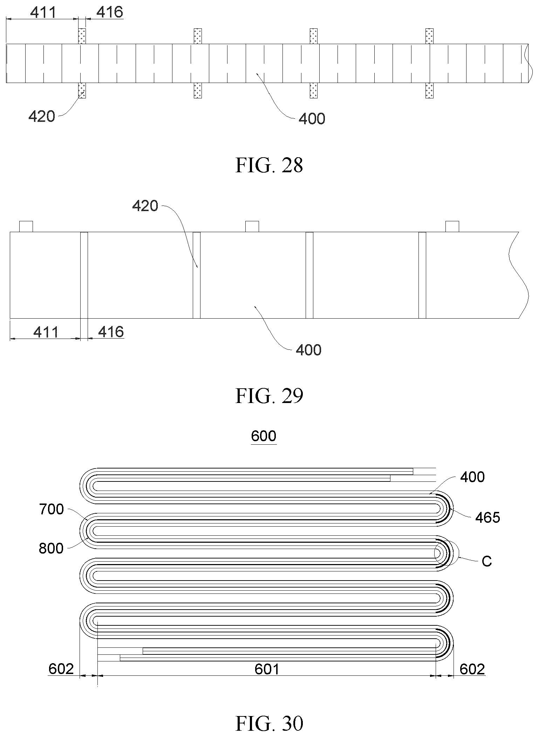

According to some embodiments of this application, optionally, referring to FIGs. 26 to 29, FIG. 26 is a schematic structural diagram of a fourth type of electrode assembly according to some embodiments of this application, FIG. 27 is a cross-sectional view of a seventh type of positive electrode current collector provided with an adhesive layer on its surface according to some embodiments of this application, FIG. 28 is a cross-sectional view of an eighth type of positive electrode current collector provided with an adhesive layer on its surface according to some embodiments of this application, and FIG. 29 is a top view of a seventh or eighth type of positive electrode current collector provided with an adhesive layer on its surface according to some embodiments of this application. The to-be-bent position 412 further includes a fourth to-be-bent position 416, the fourth to-be-bent position 416 is used for forming a fourth bent portion 464 adjacent to the third bent portion 463 in the winding direction, and the adhesive liquid is provided on at least one surface of the fourth to-be-bent position 416.

The fourth to-be-bent position 416 is a position of the positive electrode current collector 410 where the adhesive liquid is provided, and the fourth to-be-bent position 416 corresponds to the fourth bent portion 464.

The fourth bent portion 464 is a structure with fourth third largest curvature of the positive electrode plate 400, and a straight portion 401 is provided between the fourth bent portion 464 and the third bent portion 463.

The fourth bent portion 464 on the inner surface of the electrode assembly 22 is a region where lithium precipitation is the fourth most likely to occur. Providing the adhesive liquid on at least one surface of the fourth to-be-bent position 416 can ensure that after the wound structure is formed using the positive electrode plate 400, the positive electrode active material capacity at the fourth bent portion 464 is smaller than the corresponding negative electrode active material capacity, thereby weakening or preventing lithium release reactions at the active material layer in that region of the positive electrode plate 400, and improving the safety and service life of the battery while the energy density of the battery is ensured.

For example, with the adhesive liquid provided on one surface of the fourth to-be-bent position 416 to form the adhesive layer 420, the fourth bent portion 464 may include the positive electrode current collector 410, the second positive electrode active material layer 450 on the outer surface of the positive electrode current collector 410, the adhesive layer 420 on the inner surface of the positive electrode current collector 410, and the first positive electrode active material layer 440. Alternatively, with the adhesive liquid provided on two surfaces of the fourth to-be-bent position 416 to form the adhesive layer 420, the fourth bent portion 464 may include the positive electrode current collector 410, the adhesive layer 420 on two surfaces of the positive electrode current collector 410, and the first positive electrode active material layer 440. Alternatively, with the adhesive liquid provided on one surface of the fourth to-be-bent position 416 to form the adhesive layer 420, the fourth bent portion 464 may include the positive electrode current collector 410, the adhesive layer 420 on the inner surface of the positive electrode current collector 410, and the first positive electrode active material layer 440. Alternatively, with the adhesive liquid provided on one surface of the fourth to-be-bent position 416 to form the adhesive layer 420, the fourth bent portion 464 may include the positive electrode current collector 410, the adhesive layer 420 on the outer surface of the positive electrode current collector 410, and the first positive electrode active material layer 440.

In addition, for the positive electrode plate 400 used for forming the electrode assembly 22 of a wound structure, in preparation, the adhesive liquid may be provided only at the second to-be-bent position 414, the third to-be-bent position 415, the fourth to-be-bent position 416, or other to-be-bent positions 412 to form the adhesive layer 420. Alternatively, the adhesive liquid is provided only at the second to-be-bent position 414 and the third to-be-bent position 415 to form the adhesive layer 420. Alternatively, the adhesive liquid is provided only at the third to-be-bent position 415 and the fourth to-be-bent position 416 to form the adhesive layer 420. Alternatively, the adhesive liquid is provided only at the second to-be-bent position 414, the third to-be-bent position 415, and the fourth to-be-bent position 416 to form the adhesive layer 420. This is not limited in this application.

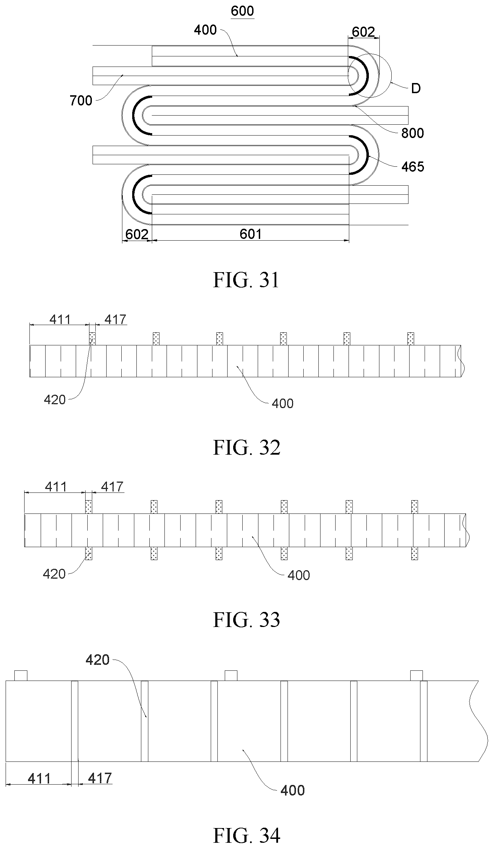

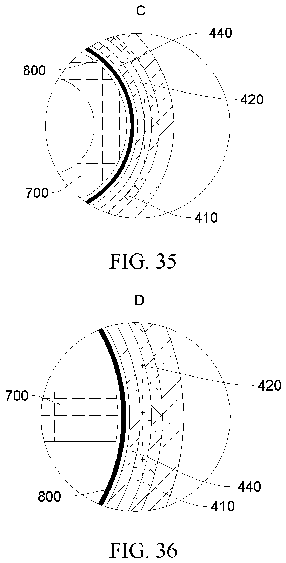

According to some embodiments of this application, optionally, referring to FIGs. 30 to 36, FIG. 30 is a schematic structural diagram of a fifth type of electrode assembly according to some embodiments of this application, FIG. 31 is a schematic structural diagram of a sixth type of electrode assembly according to some embodiments of this application, FIG. 32 is a cross-sectional view of a ninth type of positive electrode current collector provided with an adhesive layer on its surface according to some embodiments of this application, FIG. 33 is a cross-sectional view of a tenth type of positive electrode current collector provided with an adhesive layer on its surface according to some embodiments of this application, FIG. 34 is a top view of a ninth or tenth type of positive electrode current collector provided with an adhesive layer on its surface according to some embodiments of this application, FIG. 35 is a partial schematic diagram of a first type of fifth bent portion according to some embodiments of this application, and FIG. 36 is a partial schematic diagram of a second type of fifth bent portion according to some embodiments of this application. The positive electrode plate 400 is used for forming a laminated structure, the to-be-bent position 412 includes a fifth to-be-bent position 417, the fifth to-be-bent position 417 is used for forming a fifth bent portion 465 covering a negative electrode plate 700, and the adhesive liquid is provided on at least one surface of the fifth to-be-bent position 417.

Refer to FIG. 30. The electrode assembly 22 of the laminated structure includes an electrode assembly 22 formed by folding the positive electrode plate 400, the negative electrode plate 700, and the separator 800. The electrode assembly 22 has bent regions 602 and a straight region 601. The straight region 601 is connected to the bent region 602. The middle part of the electrode assembly 22 is the straight region 601, and multiple bent regions 602 are at two ends of the straight region 601. Each bent region 602 includes electrode plates on the inner surface and outer surface, curves obtained after folding the positive electrode plate 400 and negative electrode plate 700 on the inner surface have the same curvature, and curves obtained after folding the positive electrode plate 400 and negative electrode plate 700 on the outer surface at the bent region 602 have the same curvature.

Refer to FIG. 31. The electrode assembly 22 of the laminated structure includes an electrode assembly 22 formed by inserting multiple negative electrode plates 700 into multiple insertion slots formed by folding the positive electrode plate 400 and the separator 800. The electrode assembly 22 has bent regions 602 and a straight region 601. The straight region 601 is connected to the bent region 602. The middle part of the electrode assembly 22 is the straight region 601, and multiple bent regions 602 are at two ends of the straight region 601. Each bent region 602 includes the negative electrode plate 700 on the inner surface and the positive electrode plate 400 on the outer surface. Curves obtained after folding the positive electrode plate 400 on the outer surface at each bent region 602 have substantially the same curvature.

The fifth to-be-bent position 417 is a position of the positive electrode current collector 410 where the adhesive liquid is provided, and the fifth to-be-bent position 417 corresponds to the fifth bent portion 465.

Since curves obtained after folding the positive electrode plate 400 on the outer surface at each bent region 602 of the electrode assembly 22 of a laminated structure have the same curvature, the fifth bent portion 465 may be a bending portion at any position.

The fifth bent portion 465 of the laminated structure is a region where lithium precipitation is the fifth most likely to occur. Providing the adhesive liquid on at least one surface of the fifth to-be-bent position 417 can ensure that after the laminated structure is formed using the positive electrode plate 400, the positive electrode active material capacity at the fifth bent portion 465 is smaller than the corresponding negative electrode active material capacity, thereby weakening or preventing lithium release reactions at the active material layer in that region of the positive electrode plate 400, and improving the safety and service life of the battery while the energy density of the battery is ensured.

Optionally, the adhesive layer 420 is formed by providing the adhesive liquid on one surface of the fifth to-be-bent position 417, and the adhesive layer 420 is located on the inner surface of the fifth bent portion 465.

For the electrode assembly 22 of the laminated structure, the inner surface of the positive electrode current collector 410 is larger than the outer surface of the corresponding negative electrode current collector. As a result, a positive electrode active material capacity at the inner surface of the positive electrode current collector 410 is larger than the corresponding negative electrode active material capacity under normal conditions, leading to highly likely lithium precipitation reaction. Providing the adhesive liquid on one surface of the fifth to-be-bent position 417 to form the adhesive layer 420 can reduce the positive electrode active material capacity at the inner surface of the positive electrode current collector 410 of the fifth bent portion 465, ensuring that the positive electrode active material capacity in that region is smaller than the corresponding the negative electrode active material capacity, thereby weakening or preventing lithium release reactions at the active material layer of some bent regions 602 of the positive electrode plate 400, and improving the safety and service life of the battery.

Refer to FIGs. 35 and 36. The adhesive liquid is provided on one surface of the fifth to-be-bent position 417 to form the adhesive layer 420, the fifth bent portion 465 includes the positive electrode current collector 410, the second positive electrode active material layer 450 on the outer surface of the positive electrode current collector 410, the adhesive layer 420 on the inner surface of the positive electrode current collector 410, and the first positive electrode active material layer 440.

In some other embodiments of this application, with the adhesive liquid provided on two surfaces of the fifth to-be-bent position 417 to form the adhesive layer 420, the fifth bent portion 465 may include the positive electrode current collector 410, the adhesive layer 420 on two surfaces of the positive electrode current collector 410, and the first positive electrode active material layer 440. Alternatively, with the adhesive liquid provided on one surface of the fifth to-be-bent position 417 to form the adhesive layer 420, the fifth bent portion 465 may include the positive electrode current collector 410, the adhesive layer 420 on the inner surface of the positive electrode current collector 410, and the first positive electrode active material layer 440. Alternatively, with the adhesive liquid provided on one surface of the fifth to-be-bent position 417 to form the adhesive layer 420, the fifth bent portion 465 may include the positive electrode current collector 410, the adhesive layer 420 on the outer surface of the positive electrode current collector 410, and the first positive electrode active material layer 440.

Furthermore, the method for preparing an electrode plate according to this application is further described in detail with reference to examples. The parameters of the method for preparing an electrode plate in Examples 1 to 30 and Comparative Examples 1 to 4 are shown in Tables 1 and 2.

In Examples 1 to 15 and Comparative Examples 1 and 2, the photocurable adhesive liquid is used to form the adhesive layer 420. The photocurable adhesive liquid in Examples 1 to 15 and Comparative Examples 1 and 2 is irradiated with 395 nm ultraviolet light for 30s, the ultraviolet light having a light intensity of 1000 mJ/cm².

In Examples 16 to 30 and Comparative Examples 3 and 4, the hot-melt adhesive liquid is used to form the adhesive layer 420.

The positive electrode plates 400 in Examples 1 to 13 and 16 to 28, and Comparative Examples 1 and 3 are used for forming a wound structure. The positive electrode plates 400 in Examples 14, 15, 29, and 30, and Comparative Examples 2 and 4 are used for forming a laminated structure shown in FIG. 30.

The positive electrode current collector 410 of the positive electrode plate 400 has positive electrode active material layers 430 on two surfaces.

The ratios of the thickness of the second positive electrode active material layer 450 to a sum of the thickness of the first positive electrode active material layer 440 and thickness of the adhesive layer 420 are 1:1 in all examples and comparative examples.

**Table 1 Method for preparing positive electrode plate in Examples 1 to 15 and Comparative Examples 1 and 2**

| No. | Photocurable adhesive liquid | | | | | Position for applying adhesive liquid | Ratio of thickness of first positive electrode active material layer 440/thickness of second positive electrode active material layer 450 |
|---|---|---|---|---|---|---|---|
| | Prepolymer | Prepolymer molecular weight | Monomer | Initiator | Additive | | |
| Example 1 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Inner surface of first, second, third, and fourth to-be-bent positions | 50% |
| Example 2 | 67wt% epoxy acrylate | 3000 | 15wt% isobornyl acrylate+13wt% pentaerythritol triacrylate | 4.5wt% benzoin dimethyl ether | 0.5wt% dihydrodicyclopentadienyl acrylate | Inner surface of first, second, third, and fourth to-be-bent positions | 50% |
| Example 3 | 67wt% epoxy acrylate | 3000 | 15wt% diepoxy ethylene glycol diglycidyl ether+13wt% resorcinol diglycidyl ether | 4.5wt% benzoin dimethyl ether | 0.5wt% dihydrodicyclopentadienyl acrylate | Inner surface of first, second, third, and fourth to-be-bent positions | 50% |
| Example 4 | 66wt% acrylate | 3000 | 15wt% isobornyl acrylate+14wt% pentaerythritol triacrylate | 4.5wt% benzoin butyl ether | 0.5wt% dihydrodicyclopentadienyl acrylate | Inner surface of first, second, third, and fourth to-be-bent positions | 50% |
| Example 5 | 69wt% acrylate | 3000 | 12wt% allyl glycidyl ether+14wt% pentaerythritol triacrylate | 4.5wt% benzoin dimethyl ether | 0.5wt% dioctyl phthalate | Inner surface of first, second, third, and fourth to-be-bent positions | 50% |
| Example 6 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Inner surface of first, second, and third to-be-bent positions | 50% |
| Example 7 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Inner surface of first and second to-be-bent positions | 50% |
| Example 8 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Inner surface of first to-be-bent position | 50% |
| Example 9 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Two surfaces of first to-be-bent position | 50% |
| Example 10 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Inner surface of first, second, third, and fourth to-be-bent positions | 10% |
| Example 11 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Inner surface of first, second, third, and fourth to-be-bent positions | 20% |
| Example 12 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Inner surface of first, second, third, and fourth to-be-bent positions | 80% |
| Example 13 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Inner surface of first, second, third, and fourth to-be-bent positions | 90% |
| Comparative Example 1 | / | / | / | / | / | / | / |
| Example 14 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Inner surface of fifth to-be-bent position | 50% |
| Example 15 | 69wt% polyurethane acrylate | 3000 | 13wt% isobornyl acrylate+13wt% hydroxypropyl methacrylate | 4.5wt% benzoin dimethyl ether | 0.5wt% dihydrodicyclopentadienyl acrylate | Two surfaces of fifth to-be-bent position | 50% |
| Comparative Example 2 | / | / | / | / | / | / | / |

**Table 2 Method for preparing positive electrode plate in Examples 16 to 30 and Comparative Examples 3 and 4**

| No. | Hot-melt adhesive liquid | Position for applying adhesive liquid | Ratio of thickness of first positive electrode active material layer 440/thickness of second positive electrode active material layer 450 |
|---|---|---|---|
| Example 16 | Polypropylene | Inner surface of first, second, third, and fourth to-be-bent positions | 50% |
| Example 17 | Polyethylene | Inner surface of first, second, third, and fourth to-be-bent positions | 50% |
| Example 18 | Polybutadiene rubber | Inner surface of first, second, third, and fourth to-be-bent positions | 50% |
| Example 19 | Poly(butadiene-acrylonitrile) | Inner surface of first, second, third, and fourth to-be-bent positions | 50% |
| Example 20 | Acrylic acid-methacrylic acid copolymer | Inner surface of first, second, third, and fourth to-be-bent positions | 50% |
| Example 21 | Polypropylene | Inner surface of first, second, or third to-be-bent position | 50% |
| Example 22 | Polypropylene | Inner surface of first and second to-be-bent positions | 50% |
| Example 23 | Polypropylene | Inner surface of first to-be-bent position | 50% |
| Example 24 | Polypropylene | Two surfaces of first to-be-bent position | 50% |
| Example 25 | Polypropylene | Inner surface of first, second, third, and fourth to-be-bent positions | 10% |
| Example 26 | Polypropylene | Inner surface of first, second, third, and fourth to-be-bent positions | 20% |
| Example 27 | Polypropylene | Inner surface of first, second, third, and fourth to-be-bent positions | 80% |
| Example 28 | Polypropylene | Inner surface of first, second, third, and fourth to-be-bent positions | 90% |
| Comparative Example 3 | / | / | / |
| Example 29 | Polypropylene | Inner surface of fifth to-be-bent position | 50% |
| Example 30 | Polypropylene | Two surfaces of fifth to-be-bent position | 50% |
| Comparative Example 4 | / | / | / |

The positive electrode plates 400 in Examples 1 to 30 and Comparative Examples 1 to 4 of this application are used to prepare batteries, and the capacity retention rates of the prepared batteries are measured. The results are shown in Table 3.

The preparation method of battery is as follows.

### (1) Preparation of negative electrode plate

A negative electrode active material graphite, a conductive agent acetylene black, a binder styrene butadiene rubber, and a thickener sodium carboxymethyl cellulose were mixed at a weight ratio of graphite, acetylene black, styrene butadiene rubber, and sodium carboxymethyl cellulose being 95:2:2:1, and deionized water was added. These substances were fully stirred and mixed to form a uniform negative electrode slurry. The slurry was applied on a negative electrode current collector copper foil, followed by drying and cold pressing to obtain a negative electrode plate. The thickness of the copper foil was 6 µm, and the total thickness of the plate was 158.5 µm.

### (2) Preparation of positive electrode plate

A positive electrode active material NCM 211, a conductive agent acetylene black, and a binder polyvinylidene fluoride were mixed at a weight ratio of 97:2:1, and a solvent N-methylpyrrolidone was added. These substances were fully stirred and mixed to form a uniform positive electrode active material slurry. The positive electrode active material slurry was applied on a positive electrode current collector 410 aluminum foil, followed by drying and cold pressing to obtain a positive electrode plate 400. Before coated with the positive electrode active material, the positive electrode current collector 410 was coated with an adhesive liquid and cured to form the adhesive layer 420 that is long enough to completely cover the to-be-bent position 412 of the positive electrode current collector 410 and extends appropriately to the large surface region. In this application, a hot-melt adhesive tape with a width of 24 µm was used.

### (3) Preparation of electrolyte

In an argon atmosphere glove box with a water content of <10 ppm, the carbonate solvents EC and EMC were mixed at a weight ratio of 3:7 to obtain a mixed solvent. Then, the thoroughly dried lithium salt LiPF₆ and additives PS and VC were dissolved in the above mixed solvent and stirred to obtain a uniform electrolyte. The concentration of LiPF₆ was 1 mol/L, and the weight ratio of PS and VC was 1%.

### (4) Preparation of a battery

The positive electrode plate 400, a separator 800, and the negative electrode plate were sequentially stacked so that the separator 800 was located between the positive electrode plate and the negative electrode plate to provide separation. Then, the resulting stack was wound to form a jelly roll. The jelly roll was placed in the outer packaging foil or metal housing body, and the prepared electrolyte was injected into the battery that was dried, followed by vacuum packaging and standing, to obtain a battery.

The method for testing the capacity retention rate of batteries is as follows.

At 45°C, the lithium-ion secondary battery was first charged at a constant current of 0.5C to 4.3 V (or other voltage, 4.3 V herein corresponds to 100% SOC), then further charged at a constant voltage of 4.3 V to a current of 0.025C, and discharged at a constant current of 0.5C to 3.0 V. This was one charge and discharge cycle, and the discharge capacity at this time was a discharge capacity of the first cycle and recorded as Cap1. The lithium-ion secondary battery was subjected to the charge and discharge cycling test according to the foregoing method. A discharge capacity of the 10th cycle was recorded as Cap2. The capacity retention rate M (%) after 10 cyclesof the lithium-ion secondary battery = (Cap2/Cap1) × 100%. A larger M value indicates a smaller capacity loss of the battery due to lithium precipitation and a better improvement effect.

**Table 3 Test results of Examples 1 to 30 and Comparative Examples 1 to 4**

| No. | Battery capacity retention rate | | |
|---|---|---|---|
| | Cap1 | Cap2 | M (%) |
| Example 1 | 116.6 | 116.3 | 99.7% |
| Example 2 | 116.3 | 115.9 | 99.7% |
| Example 3 | 116.4 | 116.0 | 99.7% |
| Example 4 | 117.4 | 116.9 | 99.6% |
| Example 5 | 115.8 | 115.5 | 99.7% |
| Example 6 | 116.7 | 116.2 | 99.6% |
| Example 7 | 115.9 | 115.3 | 99.5% |
| Example 8 | 115.3 | 115.0 | 99.7% |
| Example 9 | 115.8 | 115.6 | 99.8% |
| Example 10 | 117.1 | 116.6 | 99.6% |
| Example 11 | 116.7 | 116.0 | 99.4% |
| Example 12 | 113.4 | 113.0 | 99.6% |
| Example 13 | 112.7 | 112.3 | 99.6% |
| Comparative Example 1 | 117.4 | 115.7 | 98.6% |
| Example 14 | 116.7 | 116.0 | 99.4% |
| Example 15 | 114.9 | 114.7 | 99.8% |
| Comparative Example 2 | 117.1 | 115.8 | 98.9% |
| Example 16 | 116.2 | 115.9 | 99.7% |
| Example 17 | 116.1 | 115.5 | 99.5% |
| Example 18 | 116.6 | 115.7 | 99.2% |
| Example 19 | 115.9 | 115.4 | 99.6% |
| Example 20 | 115.5 | 115.1 | 99.7% |
| Example 21 | 116.4 | 116.1 | 99.7% |
| Example 22 | 116.4 | 116.2 | 99.8% |
| Example 23 | 116.2 | 115.8 | 99.7% |
| Example 24 | 116.5 | 115.9 | 99.5% |
| Example 25 | 116.9 | 116.5 | 99.7% |
| Example 26 | 116.8 | 116.2 | 99.5% |
| Example 27 | 114.3 | 113.9 | 99.7% |
| Example 28 | 113.5 | 112.8 | 99.4% |
| Comparative Example 3 | 116.9 | 115.9 | 99.1% |
| Example 29 | 116.5 | 116.1 | 99.7% |
| Example 30 | 114.6 | 114.3 | 99.7% |
| Comparative Example 4 | 117.3 | 116.1 | 99.0% |

It can be learned from Examples 1 to 5 that with the photocurable adhesive liquid provided on the inner surface of the first, second, third, and fourth to-be-bent positions of the positive electrode plate to form the adhesive layer, and the positive electrode plate made into a wound battery, lithium precipitation can be reduced or avoided so that the capacity retention rate of the battery can reach 99.6% or more after 10 cycles.

It can be learned from comparison between Examples 1 and 6 to 9 that with the photocurable adhesive liquid provided on the inner surface of the first, second, third, and fourth to-be-bent positions of the positive electrode plate, on the inner surface of the first, second, and third to-be-bent positions, on the inner surface of the first and second to-be-bent positions, on the inner surface of the first to-be-bent position, or on two surfaces of the first to-be-bent position to form the adhesive layer, and the positive electrode plate made into a wound battery, lithium precipitation can be reduced or avoided so that the capacity retention rate of the battery can reach 99.5% or more after 10 cycles.

It can be learned from Examples 1 and 10 to 13 that with the photocurable adhesive liquid provided at the to-be-bent position of the positive electrode plate to form the adhesive layer so as to make the thickness of the first positive electrode active material layer/the thickness of the second positive electrode active material layer fall within 10% and 80%, and the positive electrode plate made into a wound battery, lithium precipitation can be reduced or avoided so that the capacity retention rate of the battery can reach 99.4% or more after 10 cycles.

It can be learned from Example 1 and Comparative Example 1 that with no photocurable adhesive liquid provided at the to-be-bent position of the positive electrode plate to form the adhesive layer, and the positive electrode plate made into a wound battery, lithium precipitation is so serve that the capacity retention rate of the battery is only 98.6% after 10 cycles.

It can be learned from Examples 14 and 15 that with the photocurable adhesive liquid provided on the inner surface of the fifth to-be-bent position of the positive electrode plate or on two surfaces of the first to-be-bent position to form the adhesive layer, and the positive electrode plate made into a laminated battery, lithium precipitation can be reduced or avoided so that the capacity retention rate of the battery can reach 99.4% or more after 10 cycles.

It can be learned from Example 14 and Comparative Example 2 that with no photocurable adhesive liquid provided at the to-be-bent position of the positive electrode plate to form the adhesive layer, and the positive electrode plate made into a laminated battery, lithium precipitation is so serve that the capacity retention rate of the battery is only 98.9% after 10 cycles.

It can be learned from Examples 16 to 20 that with the hot-melt adhesive liquid provided on the inner surface of the first, second, third, and fourth to-be-bent positions of the positive electrode plate to form the adhesive layer, and the positive electrode plate made into a wound battery, lithium precipitation can be reduced or avoided so that the capacity retention rate of the battery can reach 99.2% or more after 10 cycles.

It can be learned from comparison between Examples 16 and 21 to 24 that with the hot-melt adhesive liquid provided on the inner surface of the first, second, third, and fourth to-be-bent positions of the positive electrode plate, on the inner surface of the first, second, and third to-be-bent positions, on the inner surface of the first and second to-be-bent positions, on the inner surface of the first to-be-bent position, or on two surfaces of the first to-be-bent position to form the adhesive layer, and the positive electrode plate made into a wound battery, lithium precipitation can be reduced or avoided so that the capacity retention rate of the battery can reach 99.5% or more after 10 cycles.

It can be learned from Examples 16 and 25 to 28 that with the hot-melt adhesive liquid provided at the to-be-bent position of the positive electrode plate to form the adhesive layer so as to make the thickness of the first positive electrode active material layer/the thickness of the second positive electrode active material layer fall within 10% and 80%, and the positive electrode plate made into a wound battery, lithium precipitation can be reduced or avoided so that the capacity retention rate of the battery can reach 99.4% or more after 10 cycles.

It can be learned from Example 16 and Comparative Example 3 that with no hot-melt adhesive liquid provided at the to-be-bent position of the positive electrode plate to form the adhesive layer, and the positive electrode plate made into a wound battery, lithium precipitation is so serve that the capacity retention rate of the battery is only 99.1% after 10 cycles.

It can be learned from Examples 29 and 30 that with the hot-melt adhesive liquid provided on the inner surface of the fifth to-be-bent position of the positive electrode plate or on two surfaces of the first to-be-bent position to form the adhesive layer, and the positive electrode plate made into a laminated battery, lithium precipitation can be reduced or avoided so that the capacity retention rate of the battery can reach 99.7% or more after 10 cycles.

It can be learned from Example 29 and Comparative Example 4 that with no hot-melt adhesive liquid provided at the to-be-bent position of the positive electrode plate to form the adhesive layer, and the positive electrode plate made into a laminated battery, lithium precipitation is so serve that the capacity retention rate of the battery is only 99.0% after 10 cycles.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of claims and summary in this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A method for preparing a positive electrode plate, wherein the positive electrode plate comprises a positive electrode current collector, the positive electrode current collector is configured with a straight position and a to-be-bent position, and the method for preparing a positive electrode plate comprises: providing an adhesive liquid on at least one surface of at least partial to-be-bent position of the positive electrode current collector and curing it to form an adhesive layer, and forming a positive electrode active material layer on at least one surface of the positive electrode current collector having the adhesive layer.

2. The method for preparing a positive electrode plate according to claim 1, wherein the positive electrode active material layer covering the adhesive layer is a first positive electrode active material layer, the positive electrode active material layer covering the straight position and connected to the first positive electrode active material layer is a second positive electrode active material layer, and a ratio of thickness of the first positive electrode active material layer to thickness of the second positive electrode active material layer is 20% to 80%.

3. The method for preparing a positive electrode plate according to claim 2, wherein in forming the positive electrode active material layer, a ratio of the thickness of the second positive electrode active material layer to a sum of the thickness of the first positive electrode active material layer and thickness of the adhesive layer is 1:(0.9-1.1).

4. The method for preparing a positive electrode plate according to any one of claims 1 to 3, wherein the adhesive liquid is a photocurable adhesive liquid.

5. The method for preparing a positive electrode plate according to claim 4, wherein the photocurable adhesive comprises a prepolymer, a monomer, and an initiator.

6. The method for preparing a positive electrode plate according to claim 5, wherein the photocurable adhesive satisfies one of the following conditions a to c:
a. the prepolymer comprises any one or more of unsaturated polyester, acrylate, epoxy acrylate, polyurethane acrylate, and polyester acrylate;
b. the monomer comprises any one or more of hydroxyethyl acrylate, hydroxypropyl methacrylate, isobornyl acrylate, tripropylene glycol acrylate, pentaerythritol triacrylate, allyl glycidyl ether, phenyl glycidyl ether, diepoxy ethylene glycol diglycidyl ether, resorcinol diglycidyl ether, N-vinylpyrrolidone, hydroxybutyl vinyl ether, and triethylene glycol divinyl ether; and
c. the initiator comprises any one or more of benzoin, benzoin ethyl ether, benzoin butyl ether, benzoin dimethyl ether, 2-acyl-2-methyl-1-phenyl ketone, 1-hydroxycyclohexyl-phenyl ketone, benzophenone, and amine compound, 2,4 diethyl thioxanthone, camphor quinone, and bis imidazole, diaryl iodonium salt, metal organic substance (cumene)cyclopentadienyliron(ii) hexa-fluorophosp, and organosilane dimethyldichlorosilane.

7. The method for preparing a positive electrode plate according to claim 5 or 6, wherein molecular weight of the prepolymer is 300 to 5000.

8. The method for preparing a positive electrode plate according to any one of claims 5 to 7, wherein the photocurable adhesive further comprises an additive, and the additive comprises any one or more of dihydrodicyclopentadienyl acrylate, 4-tert-butylcyclohexyl acrylate, triphenyl phosphite, dioctyl phthalate, and dioctyl terephthalate.

9. The method for preparing a positive electrode plate according to any one of claims 4 to 8, wherein the photocurable adhesive comprises 15wt% to 30wt% monomer, 1wt% to 7wt% initiator, 0wt% to 1wt% additive, and remaining percentage prepolymer.

10. The method for preparing a positive electrode plate according to any one of claims 4 to 9, wherein the curing comprises irradiation with ultraviolet light for 4s to 40s.

11. The method for preparing a positive electrode plate according to claim 10, wherein wavelength of the ultraviolet light is 365 nm, 375 nm, 385 nm, 395 nm, or 405 nm.

12. The method for preparing a positive electrode plate according to claim 10 or 11, wherein light intensity of the ultraviolet light is 800 mJ/cm² to 1200 mJ/cm².

13. The method for preparing a positive electrode plate according to any one of claims 1 to 3, wherein the adhesive liquid is a hot-melt adhesive liquid.

14. The method for preparing a positive electrode plate according to claim 13, wherein the hot-melt adhesive comprises polyolefin resin.

15. The method for preparing a positive electrode plate according to claim 13, wherein before the providing an adhesive liquid on at least one surface of at least partial to-be-bent position of the positive electrode current collector, the hot-melt adhesive is heated to 100°C to 180°C for melting, and after the providing an adhesive liquid on at least one surface of at least partial to-be-bent position of the positive electrode current collector, cooling is performed for curing to form the adhesive layer.

16. The method for preparing a positive electrode plate according to any one of claims 1 to 15, wherein viscosity of the adhesive liquid is 1000 mpa.s to 20000 mpa.s.

17. The method for preparing a positive electrode plate according to any one of claims 1 to 16, wherein the positive electrode plate is used for forming an electrode assembly of a wound structure, the to-be-bent position comprises a first to-be-bent position, the first to-be-bent position is used for forming a first bent portion on an innermost surface of the wound structure, and the adhesive liquid is provided on at least one surface of the first to-be-bent position.

18. The method for preparing a positive electrode plate according to claim 17, wherein the to-be-bent position further comprises a second to-be-bent position, the second to-be-bent position is used for forming a second bent portion adjacent to the first bent portion in a winding direction, and the adhesive liquid is provided on at least one surface of the second to-be-bent position.

19. The method for preparing a positive electrode plate according to claim 18, wherein the to-be-bent position further comprises a third to-be-bent position, the third to-be-bent position is used for forming a third bent portion adjacent to the second bent portion in the winding direction, and the adhesive liquid is provided on at least one surface of the third to-be-bent position.

20. The method for preparing a positive electrode plate according to claim 19, wherein the to-be-bent position further comprises a fourth to-be-bent position, the fourth to-be-bent position is used for forming a fourth bent portion adjacent to the third bent portion in the winding direction, and the adhesive liquid is provided on at least one surface of the fourth to-be-bent position.

21. The method for preparing a positive electrode plate according to any one of claims 1 to 15, wherein the positive electrode plate is used for forming a laminated structure, the to-be-bent position comprises a fifth to-be-bent position, the fifth to-be-bent position is used for forming a fifth bent portion covering a negative electrode plate, and the adhesive liquid is provided on at least one surface of the fifth to-be-bent position.

22. A positive electrode plate, wherein the positive electrode plate is prepared using the method for preparing a positive electrode plate according to any one of claims 1 to 21.

23. An electrode assembly, wherein the electrode assembly comprises the positive electrode plate according to claim 22.

24. A battery cell, wherein the battery cell comprises the electrode assembly according to claim 23.

25. A battery, wherein the battery comprises the battery cell according to claim 24.

26. An electric apparatus, wherein the electric apparatus comprises the battery according to claim 25, and the battery is configured to supply electrical energy.

27. A positive electrode plate, wherein the positive electrode plate comprises a positive electrode current collector and a positive electrode active material layer, the positive electrode active material layer is provided on at least one surface of the positive electrode current collector in a thickness direction thereof, and the positive electrode plate is configured with a straight portion and a to-be-bent portion;
an adhesive layer is provided on at least one surface of the positive electrode current collector of at least partial to-be-bent portion in a thickness direction, the adhesive layer is provided between the positive electrode current collector and the positive electrode active material layer, the positive electrode active material layer covering a surface of the adhesive layer is a first positive electrode active material layer, and the positive electrode active material layer covering the straight portion and connected to the first positive electrode active material layer is a second positive electrode active material layer; and
the adhesive layer is formed by curing an adhesive liquid applied to a surface of the positive electrode current collector.
